# EUROPÄISCHE PATENTSCHRIFT

(11) **EP 3 095 165 B1**
(45) Veröffentlichungstag und Bekanntmachung des Hinweises auf die Patenterteilung: **28.10.2020**
(21) Anmeldenummer: 15700275.9
(22) Anmeldetag: 07.01.2015
(51) Int. Cl.: H02J 3/24

(54) **VERFAHREN UND REGEL- UND/ODER STEUEREINRICHTUNG ZUM BETRIEB EINER WINDENERGIEANLAGE UND/ODER EINES WINDPARKS SOWIE WINDENERGIEANLAGE UND WINDPARK**
METHOD AND REGULATING AND/OR CONTROL DEVICE FOR OPERATING A WIND TURBINE AND/OR A WIND PARK, AND WIND TURBINE AND WIND PARK
PROCÉDÉ ET DISPOSITIF DE RÉGLAGE ET/OU COMMANDE POUR FAIRE FONCTIONNER UNE ÉOLIENNE ET/OU UN PARC ÉOLIEN ET ÉOLIENNE ET PARC ÉOLIEN CORRESPONDANTS

(30) Priorität: 16.01.2014 DE 102014200740
(43) Veröffentlichungstag der Anmeldung: 23.11.2016
(73) Patentinhaber: Wobben Properties GmbH, 26607 Aurich (DE)
(72) Erfinder: BUSKER, Kai, 26629 Großefehn (DE)
(74) Vertreter: Eisenführ Speiser
(86) Internationale Anmeldenummer: PCT/EP2015/050143
(87) Internationale Veröffentlichungsnummer: WO 2015/106994

(56) Entgegenhaltungen:
- WO-A1-2012/041527
- US-A1- 2006 012 181
- US-A1- 2008 265 577
- US-A1- 2009 099 798
- US-A1- 2013 140 820

## Beschreibung

Die vorliegende Erfindung betrifft ein Verfahren zum Betrieb einer Windenergieanlage und/oder eines Windparks und eine Regel- und/oder Steuereinrichtung zum Betrieb einer Windenergieanlage und/oder eines Windparks. Weiterhin betrifft die vorliegende Erfindung eine Windenergieanlage und einen Windpark.

Allgemein kann eine Windenergieanlage und/oder ein Windpark als ein Windenergieerzeuger d.h. eine Energieerzeugeranlage, zur Erzeugung von Energie aus Windenergie definiert werden, der insbesondere zum Einspeisen elektrischer Leistung in ein elektrisches Versorgungsnetz ausgebildet ist.

Das Einspeisen elektrischer Energie in ein elektrisches Versorgungsnetz, wie bspw. das europäische Verbundnetz oder das US-amerikanische Stromnetz, ist allgemein bekannt. Dabei wird nachfolgend unter einem elektrischen Versorgungsnetz ein Wechselspannungsnetz verstanden, wie es sich allgemein durchgesetzt hat. Das schließt nicht aus, dass Gleichspannungsabschnitte im Netz vorhanden sind. Ebenso können sich jedenfalls Aspekte, die frequenzunabhängig sind, grundsätzlich auch auf ein Gleichspannungsnetz beziehen. Historisch erfolgt eine Einspeisung in ein elektrisches Versorgungsnetz mit einem Großkraftwerk, das aus Primärenergie, wie z. B. Kohle, Kernenergie oder Gas, einen Synchrongenerator antreibt. Abhängig von der Polpaarzahl des Synchrongenerators und der Drehzahl des Synchrongenerators speist dieser mit einer bestimmten Frequenz in das Versorgungsnetz ein. Der Synchrongenerator kann steuerungstechnisch beeinflusst werden, um bspw. die Leistung einzustellen. Ein solcher Verstellprozess kann aber langsam sein. Bei sich verändernden Situationen in dem einzuspeisenden Versorgungsnetz beeinflusst oftmals, jedenfalls kurzfristig, die physikalische Reaktion des Synchrongenerators eine Änderung eines Netzzustandes. Bspw. erhöht sich die Drehzahl des Synchrongenerators, wenn das Versorgungsnetz die vom Synchrongenerator bereitgestellte bzw. bereitstellbare Leistung nicht vollständig abnehmen kann. Die somit überschüssige Leistung beschleunigt dann den Synchrongenerator, was sich in einer Erhöhung der Einspeisefrequenz bemerkbar macht. Entsprechend kann sich die Frequenz im Versorgungsnetz erhöhen.

Es ist allgemein bekannt, mittels Windenergieanlagen elektrische Leistung zu erzeugen und in ein elektrisches Versorgungsnetz einzuspeisen. Für das Einspeisen elektrischer Energie durch dezentrale Erzeugungseinheiten, wie insbesondere Windenergieanlagen, ist das Problem des Stabilitätsverlustes des Netzes, nämlich der sog. Loss of Stabilityder auch im deutschen Sprachgebrauch in der Fachwelt mit "Loss of Stability" bezeichnet und mit "LOS" abgekürzt wird-- im Grunde unbekannt. Zwar sind seit Mitte 2000 erstmals Vorschläge gemacht worden, auch Windenergieanlagen zur elektrischen Stützung des Netzes beitragen zu lassen, jedoch berücksichtigt dies nicht die Ursache eines Stabilitätsverlustes, insbesondere berücksichtigt dies nicht ein Verursachen eines Stabilitätsverlustes durch das Einspeisen in das Versorgungsnetz.

Der Verlust der Netzstabilität, also der Verlust der Stabilität des Versorgungsnetzes, kann zum Abschalten des einspeisenden Energieerzeugers führen. Ein solcher Stabilitätsverlust (LOS) beschreibt Vorgänge physikalischer Natur, welche einen Weiterbetrieb nicht mehr zulassen und durch Abschaltungen beendet werden müssen. Unter dem Verlust der Netzstabilität (LOS) ist ein Phänomen zu verstehen, bei dem zunächst eine Winkelstabilität verloren geht, was schließlich zu dem Verlust einer Spannungsstabilität führen kann. Im Falle von Kraftwerken fällt deren Leistung danach aus und kann dadurch zu einer Eskalierung von sog. Defizitleistung beitragen.

Als Stabilitätskriterien werden insbesondere zu erreichende Überströme festgelegt, welche im Fall des Auftretens eines Stabilitätsverlustes bereitgestellt werden können müssen. Dies setzt eine entsprechende Auslegung der Systeme voraus. Ein neues Kraftwerk oder dergleichen Energieerzeuger, insbesondere ein neu zu bauendes Kraftwerk, wird somit auf das Versorgungsnetz abgestimmt, wie es sich an dem Netzverknüpfungspunkt darstellt, an den das Kraftwerk angeschlossen werden soll. Es kann sich als problematisch erweisen, diese grundsätzliche Abstimmungs-Maßgabe auch während des Baus eines Windparks oder dergleichen Windenergieerzeugers einzuhalten, der insofern nur teilweise im Betrieb ist.

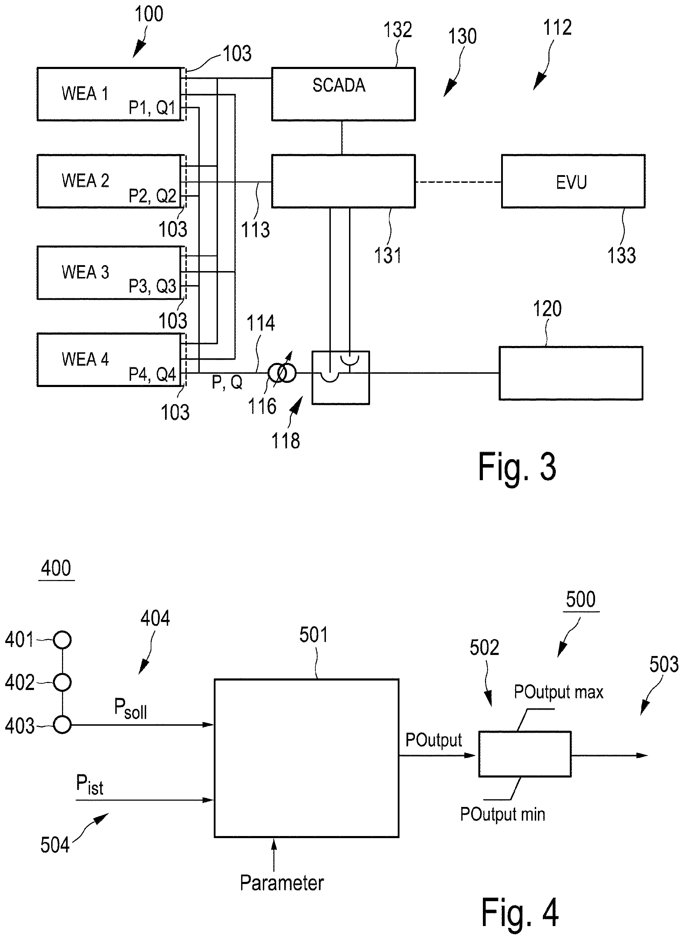

US 2007/0085343 A1 offenbart beispielsweise ein Verfahren zum Steuern einer Windenergieanlage in Abhängigkeit einer Änderung eines Systemparameters für den Betrieb eines elektrischen Versorgungsnetzes. Dabei wird die Windenergieanlage mit einer höheren Abgabeleistung zur Abgabe in das elektrische Versorgungssystem betrieben, im Vergleich zu einem Nennbetrieb. In Bezug auf Fig. 3 der US 2007/0085343 A1 wird die Möglichkeit beschrieben, Oszillationen einer Systemfrequenz des elektrischen Versorgungsnetzes als Konsequenz eines Lastausfalls auszugleichen.

WO 2011/000754 A1 offenbart ein Verfahren zum Erfassen elektrischer Größen eines dreiphasigen Wechselspannungsnetzes mit einer ersten, zweiten und dritten Phase umfassend die Schritte: Messen jeweils eines Spannungswertes, Transformieren der Spannungswerte und Wiederholen des Messens und Transformierens. Dies ist einer möglichst genauen und zeitnahen Erfassung vornehmlich der elektrischen Spannungen des elektrischen Versorgungsnetzes zuträglich.

Das Deutsche Patent- und Markenamt hat in der Prioritätsanmeldung folgenden Stand der Technik recherchiert: WO 2013/102791A1, WO 2011/000754 A1, US 7,639,893 B2, US 2007/0085343 A1 und DE 10 2011 086 988 B3.

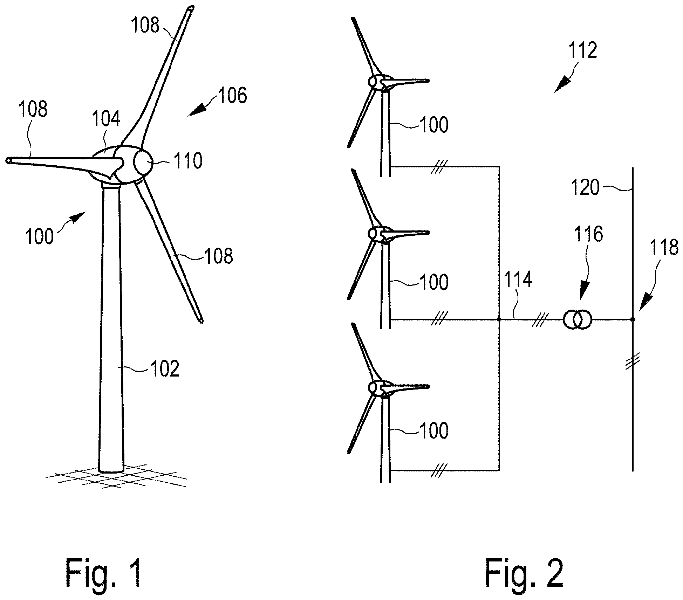

Schematisch in Fig. 1 ist eine Windenergieanlage gezeigt, also ein einzelner Windenergieerzeuger, die über einen für diese vorgesehenen Netzverknüpfungspunkt (der zum Teil auch als Anschlusspunkt oder Einspeisepunkt bezeichnet wird) an das elektrische Versorgungsnetz zum Einspeisen elektrischer Energie angeschlossen ist.

Zunehmend werden statt Einzelanlagen zu betreiben, auch mehrere Windenergieanlagen in einem Windpark aufgestellt, der eine entsprechend große Leistung in das Versorgungsnetz einspeisen kann. Unter einem Windpark ist grundsätzlich eine Anzahl von Windenergieanlagen, wenigstens aber zwei Windenergieanlagen, zu verstehen, die über einen einzigen Netzverknüpfungspunkt an das elektrische Versorgungsnetz zum Einspeisen elektrischer Energie angeschlossen sind. Ein solcher Windpark ist schematisch in Fig. 2 gezeigt und zeichnet sich insbesondere durch einen gemeinsamen Netzverknüpfungspunkt aus, über den alle Windenergieanlagen des Windparks in das elektrische Versorgungsnetz einspeisen. Gleichwohl kann der Windpark --dann als Mischpark bezeichnet-- auch einzelne Windenergieanlagen mit jeweils separatem Netzverknüpfungspunkt umfassen; ein Mischpark kann auch eine Anzahl von Windparks und eine Anzahl von Windenergieeinzelanlagen umfassen.

Windparks können im Vergleich zu Windenergieeinzelanlagen nicht nur vergleichsweise hohe Leistung in das elektrische Versorgungsnetz einspeisen, sondern sie weisen grundsätzlich ein entsprechend großes Regelungspotential zum Stabilisieren des elektrischen Versorgungsnetzes auf. Insoweit schlägt z.B. die US-Anmeldung US 7,638,893 vor, dass bspw. der Betreiber des elektrischen Versorgungsnetzes dem Windpark eine Leistungsvorgabe geben kann, um die einzuspeisende Parkleistung zu reduzieren, um dadurch eine weitere Steuerungsmöglichkeit für sein Versorgungsnetz zu haben. Solche Regelungseingriffe können dabei, je nach Größe des Windparks, schwach sein. Sie können zudem aufgrund der Tatsache schwierig zu handhaben sein, dass Windenergieanlagen und auch Windparks dezentrale Erzeugungseinheiten sind, weil sie vergleichsweise großflächig über ein Gebiet verteilt sind, indem das jeweilige elektrische Versorgungsnetz betrieben wird.

Weiterhin gibt es in manchen Ländern, wie bspw. in Deutschland, Bestrebungen, herkömmliche Großkraftwerke, insbesondere Kernkraftwerke, durch regenerative Energieerzeuger, wie Windenergieanlagen zu ersetzen. Dabei stellt sich aber das Problem, dass mit dem Abschalten und "vom Netz nehmen" eines Großkraftwerks auch dessen netzstabilisierende Wirkung verloren geht. Die verbleibenden bzw. neu hinzukommenden Energieerzeugungseinheiten werden somit benötigt, diese Änderung der Stabilität zumindest zu berücksichtigen. Problematisch ist, dass selbst bei einer in das Netz einspeisenden Windenergieeinzelanlage, beziehungsweise bei einem in das Netz einspeisenden Windpark, die Reaktionszeit zum Aufbau einer netzstabilisierenden Wirkung gegebenenfalls zu langsam ist. Dies ist grundsätzlich eine Herausforderung, da eine Windenergieanlage oder ein Windpark ein vom aktuellen Windangebot abhängiger Windenergieerzeuger ist, also Leistungserzeuger ist. Wenn darüberhinaus nur eine begrenzte Möglichkeit gegeben ist, zügig auf aktuelle Windgegebenheiten zu reagieren, erschwert oder verhindert dies die Ausübung netzstabilisierender Wirkungen.

Zunächst zu unterscheiden von vorgenannten Problemen der Netzstabilisierung sind problematische Situationen der Windenergieanlage selbst bzw. des Windparks als solcher. Dies gilt nicht nur für problematische Windsituationen sondern erst recht auch während einer Bauphase eines Windparks. Es zeigt sich, dass --wie grundsätzlich bei jedem Steuer- und Regelsystem mit einer Regelstrecke-- eine Steuer- und Regelvorrichtung für eine Windenergieanlage bei übersteuerten Betriebsbedingungen dazu neigen kann, die Windenergieanlage zur Abgabe einer nicht angemessenen Leistung, insbesondere einer oszillierenden Leistungsabgabe, zu veranlassen. Dies kann unterschiedliche Ursachen haben, ist aber regelmäßig auf eine Situation zurückzuführen, in der man von einer nicht abgestimmten oder unvorteilhaft abgestimmten Anpassung zwischen Steuer- und Regeleinrichtung zur Windenergieanlage bzw. Windpark als solchen ausgehen kann. Es kann problematisch sein, insgesamt eine Windenergieanlage --einerseits-- unter Vermeidung von unerwünschten steuer- und regelbedingten Ausnahmezuständen zu betreiben --andererseits aber-- eine Steuerung und Regelung der Windenergieanlage für eine netzstabilisierende Wirkung auszulegen, die gegebenenfalls außerhalb des Nennbetriebs liegen kann. Insofern ist der Problemkreis einer netzstabilisierenden Betriebsweise einer Windenergieanlage einerseits und einer Vermeidung von unvorteilhaften --weil insbesondere schwingungsanfälligen-- Zuständen einer Steuer- und/oder Regeleinrichtung andererseits zwar zu unterscheiden hinsichtlich Ursache und Wirkung, jedoch können sich diese auch gegenseitig beeinflussen.

Wünschenswert ist es, eine möglichst verlässliche Leistungsabgabe eines Windenergieerzeugers, insbesondere einer Windenergieanlage und/oder eines Windparks, zu ermöglichen; auch in grundsätzlich, insbesondere hinsichtlich der Regelungssituation, weniger vorteilhaften Bereichen, z. B. außerhalb des Nennbetriebs oder im Falle eines erst teilweise fertiggestellten aber schon teilweise betriebenen Windparks. Auch vor diesem Hintergrund ist ein netzstabilisierender Umgang mit einer Abgabeleistung in das elektrische Versorgungsnetz erstrebenswert.

Wünschenswert ist eine Lösung mittels der ein Windenergieerzeuger, insbesondere eine Windenergieanlage und/oder ein Windpark, eine Stützung eines elektrischen Versorgungsnetzes verbessern kann; dies kann genutzt werden, um ein möglichst stabiles Versorgungsnetz zu schaffen und/oder den Windenergieerzeuger im Rahmen beabsichtigter und gewünschter Regel- und Steuerzustände zu betreiben; insbesondere selbst dann, wenn eine Regel- und Steuereinrichtung und der Windenergieerzeuger noch nicht optimiert oder aufeinander abgestimmt sein sollten.

Aufgabe der Erfindung ist es, eine Vorrichtung und ein Verfahren anzugeben, die wenigstens eines der genannten Probleme adressiert. Zumindest soll eine alternative Lösung zu bisherigen Ansätzen in diesem Bereich vorgeschlagen werden. Aufgabe der Erfindung ist es insbesondere, eine Vorrichtung und ein Verfahren anzugeben, mittels dem eine Abgabeleistung einer Windenergieanlage und/oder eines Windparks in verbesserter Weise wenigstens überwacht, insbesondere geregelt und/oder gesteuert, werden kann. Insbesondere ist es Aufgabe der Erfindung, eine Vorrichtung und ein Verfahren derart weiterzubilden, dass die Abgabeleistung zum einen in verlässlicher Weise vergleichsweise genau geregelt werden kann. Insbesondere soll dadurch eine verbesserte Reaktionszeit auf akute Windverhältnisse und/oder Betriebszustände der Windenergieanlage und/oder eines Windparks gegeben sein; dies insbesondere, um darüber hinaus in verbesserter Weise eine netzstabilisierende Wirkung zu erreichen, insbesondere jedenfalls diese nicht oder nur unwesentlich einzuschränken. Vorzugsweise sollen aber die dazu sinnvollen Funktionsabläufe eines Windenergieerzeugers oder dessen Parametrisierung vorteilhaft gestaltet werden.

Die Aufgabe hinsichtlich des Verfahrens wird erfindungsgemäß mit einem Verfahren gemäß Anspruch 1 gelöst.

Das Konzept der Erfindung führt auch auf eine Regel- und Steuervorrichtung gemäß dem Anspruch 13.

Die Aufgabe hinsichtlich der Vorrichtung wird erfindungsgemäß mit einer Windenergieanlage gemäß Anspruch 15 und die Aufgabe hinsichtlich der Vorrichtung wird erfindungsgemäß mit einem Windpark gemäß Anspruch 16 gelöst.

Die Erfindung geht von einem Verfahren zum Betrieb eines Windenergieerzeugers, insbesondere einer Windenergieanlage und/oder eines Windparks, zum Einspeisen elektrischer Leistung in ein elektrisches Versorgungsnetz aus, wobei eine Abgabeleistung, insbesondere eine Wirk- und/oder Blindleistung, mittels wenigstens einem Leistungsregelmodul einer Regel- und/oder Steuereinrichtung geregelt und/oder gesteuert wird, aufweisend die Schritte:
- Vorgeben eines Leistungs-Regeleingangswertes und Bestimmen eines Leistungs-Regelausgangswertes aus dem Leistungs-Regeleingangswert sowie Ausgeben des Leistungs-Regelausgangswertes, wobei
- ein zeitlicher Verlauf der Abgabeleistung, insbesondere der Blindleistung, des Windenergieerzeugers über einen ersten Erfassungszeitraum erfasst wird, und
- ein zeitlicher Verlauf der Netzspannung des elektrischen Versorgungsnetzes über einen zweiten Erfassungszeitraum erfasst wird, wobei
- über den Erfassungszeitraum geprüft wird, ob die Abgabeleistung und die Netzspannung einen Schwingungsverlauf aufweist.

Erfindungsgemäß ist darüber hinaus vorgesehen, dass
- dem Schwingungsverlauf eine Oszillation mit einer Periode und mit einer Amplitude zugeordnet wird und
- festgestellt wird, dass die Oszillation über den Erfassungszeitraum anhält und dabei nicht abnimmt, und
- ein Signal zur Signalisierung eines Aufschwingungszustand ausgegeben wird.

Der erste und zweite Erfassungszeitraum ist vorteilhaft der gleiche Zeitraum. Der Windenergieerzeuger ist vorteilhaft eine Windenergieanlage, insbesondere Windenergieeinzelanlage, und/oder ein Windpark. Unter einem Schwingungsverlauf ist allgemein jeder Verlauf einer mit Wiederholungen gleichen oder schwankenden Amplitude zu verstehen. Unter einer Oszillation ist im engeren Sinne eine Schwingung zu verstehen, der wenigstens zeitweise eine feste Periode oder ggfs. sich verändernde Periode zugeordnet werden kann und eine, ggfs. veränderliche, Amplitude.

Die Erfindung geht von der Überlegung aus, dass es grundsätzlich vorteilhaft ist, einen wenn nicht ständig bestehenden, so doch jedenfalls zeitlich begrenzten ersten und/oder zweiten Erfassungszeitraum vorzusehen, für dessen Zeitfenster die Abgabeleistung des Winderzeugers und die Netzspannung des elektrischen Versorgungsnetzes erfasst wird. Das Erfassen einer Abgabeleistung des Winderzeugers und die Netzspannung des elektrischen Versorgungsnetzes erfolgt vorteilhaft bereits aus Gründen der Leistungsregelung und/oder Leistungssteuerung des Windenergieerzeugers. Vorteilhaft erfolgt das Erfassen auch aus Gründen der Überwachung einer Netzstabilität. Beispiele einer bevorzugten Leistungsregelung, insbesondere netzfrequenzabhängigen Leistungsregelung, sind in der Beschreibung der Zeichnung erläutert.

Die Erfindung geht von der Überlegung aus, dass ein Auftreten von Schwingungsverläufen bei der Abgabeleistung der Windenergieerzeugung jedenfalls ein Indiz dafür ist, dass eine ggfs. unerwünschte Instabilität einer Regelung und/oder ein Auftreten von Schwingungsverläufen bei der Netzspannung jedenfalls ein Indiz dafür ist, dass eine ggfs. unerwünschte Netzinstabilität des elektrischen Versorgungsnetzes gegeben ist. Zum Betrieb eines Windenergieerzeugers, das heißt insbesondere einer Windenergieanlage und/oder eines Windparks oder einer sonstigen Anlage zur Energieerzeugung aus Windenergie, bedarf es nach der Erkenntnis der Erfindung vorteilhaft einer verlässlicheren Maßgabe für den Betrieb, z. B. hinsichtlich einer Parametereinstellung eines Reglers oder einer Angabe, was zu regeln und/oder zu steuern ist beim Auftreten eines Schwingungsverlaufs. Grundsätzlich können Schwingungsverläufe auch dann auftreten, ohne dass die vorgenannten Instabilitäten vorliegen; beispielsweise können Schwingungsverläufe normal infolge von schwankenden Windverhältnissen oder bewussten Leistungsanforderungen auftreten oder einfach als parasitäre oder sonstige nicht regelungsbedürftige Schwingungen. Solche und andere in diesem Sinne irrelevante Schwingungsverläufe sind gemäß der Erkenntnis der Erfindung im Rahmen eines Betriebsverfahrens eines Windenergieerzeugers unberücksichtigt zu lassen.

Ausgehend von dieser Erkenntnis ist erfindungsgemäß vorgesehen, dass dem Schwingungsverlauf eine Oszillation mit einer Periode und mit einer Amplitude zugeordnet wird und dazu festgestellt wird, dass die Oszillation über den Erfassungszeitraum zum einen anhält und dabei zum anderen nicht abnimmt. Wenn die vorgenannten beiden Kriterien erfüllt sind, wird ein Signal ausgegeben, das einen Aufschwingungszustand signalisiert. Der erste und zweite Erfassungszeitraum oder ein darin definierter Prüfzeitraum kann anwendungsspezifisch gewählt werden.

Das vorgenannte erste Kriterium gemäß dem Schwingungsverlauf eine Oszillation mit einer Periode und mit einer Amplitude zugeordnet werden kann, basiert auf der Erkenntnis, dass es auch nicht periodische Schwingungsverläufe geben kann, die gemäß dem Konzept der Erfindung vorliegend als unerheblich im Rahmen eines Verfahrens zum Betrieb eines Windenergieerzeugers beziehungsweise einer Steuerung und Regelung derselben anzusehen ist. Die Erfindung geht von der Erkenntnis aus, dass insofern nur echte Oszillationen --also durch eine Periode und eine Amplitude gekennzeichnete Schwingungen über den Erfassungszeitraum oder jedenfalls einen relevanten Prüfzeitraum-- Schwingungsverläufe darstellen, die auf eine nicht gewünschte Instabilität hinweisen. Die Erfindung lässt sich dabei von der Überlegung leiten, dass letztendlich ein Aufschwingungsverhalten im Rahmen des Betriebsverfahrens ausgeregelt werden soll. Grundsätzlich ist es dabei gleichwohl möglich, dass festgestellte periodische Verläufe mit bestimmter Amplitude einer gewissen Varianz unterliegen; das heißt die Periode kann eine Variation innerhalb einer gewissen Bandbreite aufweisen, insbesondere wenn die Variation einer bestimmten Regel folgt - dies deutet auf eine Systemschwäche hin, die ein Aufschwingungsverhalten verursachen kann. Auszuschließen sind insofern solche Schwingungsverläufe, die rein statistischer Natur sind ohne dass bei deren Verlauf über einen beliebig kleinen Zeitraum ein periodisches Verhalten erkennbar wäre.

Die Erfindung geht weiter von der Erkenntnis aus, dass eine Amplitude der Oszillation demgemäß grundsätzlich beliebig klein sein kann; wenn aber festgestellt wird, dass die Oszillation über den Erfassungszeitraum anhält und dabei nicht abnimmt, insbesondere deren Amplitude dabei nicht abnimmt, deutet dies auf eine Systemschwäche hin, die ein Aufschwingungsverhalten verursacht.

Grundsätzlich sind Erkenntnisse, Erfahrungen oder anderes Wissen vom Anschluss und Betrieb von Großkraftwerken am elektrischen Versorgungsnetz nicht übertragbar auf Windenergieanlagen, einschließlich großer Windparks mit vielen Windenergieanlagen, die an das Versorgungsnetz zum Einspeisen angeschlossen sind. Bereits der zuständige Fachmann, der ein Kraftwerk an ein Versorgungsnetz anschließt und daran betreiben will, ist ein anderer als der Fachmann, der eine Windenergieanlage an das Versorgungsnetz anschließen und daran betreiben will. Windenergieanlagen --und vieles des Folgenden gilt auch für andere dezentrale Erzeugungseinheiten-- sind vom Wind abhängig und müssen somit eine schwankende Energiequelle berücksichtigen; sie speisen üblicherweise nicht mit einem direkt mit dem Netz gekoppelten Synchrongenerator in das Versorgungsnetz ein, sondern verwenden einen spannungsbasierten Wechselrichter; sie weisen eine andere Größenordnung auf als Großkraftwerke, wobei ihre Nennleistung üblicherweise um etwa drei Zehnerpotenzen unter der eines Großkraftwerks liegen; sie unterliegen üblicherweise anderen politischen Gesetzen, die ihnen häufig eine Abnahme der Leistung durch die Betreiber elektrischer Versorgungsnetze zusichern; sie sind üblicherweise dezentral aufgestellt; sie speisen üblicherweise in ein Mittelspannungsnetz ein, wohingegen Großkraftwerke üblicherweise in ein Höchstspannungsnetz einspeisen.

Diese und andere vorteilhafte Weiterbildungen der Erfindung sind den Unteransprüchen zu entnehmen und geben im Einzelnen vorteilhafte Möglichkeiten an, das Konzept der Erfindung im Rahmen der Weiterbildungen und unter Angabe weiterer Vorteile zu realisieren.

Das vorgenannte zweite Kriterium, dass die Oszillation über den Erfassungszeitraum anhält und dabei nicht abnimmt, lässt sich insbesondere mit weiterbildenden Maßnahmen in besonders bevorzugter Weise prüfen. Im Rahmen einer bevorzugten Weiterbildung ist es möglich, weitere Kriterien für den Amplitudenverlauf anzugeben. Insbesondere kann das Erkennen eines Überschreitens einer unteren Schwellwertamplitude bereits ausreichen, um einen Aufschwingungszustand zu signalisieren, wenn die Oszillation ausreichend lange anhält; selbst wenn die Amplitude über die Zeit nicht abfallen sollte.

Insbesondere kann das Erkennen eines Überschreitens einer oberen Schwellwertamplitude allein bereits ausreichen, um einen Aufschwingungszustand zu signalisieren, insbesondere unabhängig von einer Zeitdauer der Oszillation und/oder unabhängig von einem Anstiegs- oder Abstiegsverhalten der Oszillation.

Grundsätzlich kann auch beim Vorliegen einer steigenden Amplitude, unabhängig von deren Größe oder Steigungsgradienten oder Zeitdauer der Oszillation auf einen Aufschwingungszustand erkannt werden. Selbst im Falle einer konstanten Amplitude kann auch ein Aufschwingungszustand erkannt werden, gegebenenfalls können weitere Bedingungen im Falle einer konstanten Amplitude vorgesehen werden, wie beispielsweise die Maßgabe, dass die konstante Amplitude über einen Mindestzeitraum vorliegen sollte.

Im Rahmen einer besonders bevorzugten Weiterbildung sieht ein entsprechender Erkennungsalgorithmus vor, dass eine zunehmende Amplitude, eine konstante Amplitude oder eine abnehmende Amplitude einer Oszillation erkannt wird. Ein Signal eines Aufschwingungszustands wird nur im Falle einer Zunahme oder einer Konstanz der Amplitude ausgegeben.

Beispielhaft sei dazu bereits an dieser Stelle auf einen zunehmenden Netzspannungsverlauf verwiesen, der eine Netzspannungsamplitude oberhalb einer Nennspannung aufweist und ab einem gewissen Zeitpunkt zu einem spontanen Entstehen einer Oszillation kippt; diese kann zum einen eine feste Periode haben und zum anderen eine mit hohem Gradienten und bis über eine obere Schwellwertamplitude ansteigende Amplitude aufweisen.

Im Rahmen einer besonders bevorzugten Weiterbildung ist vorgesehen, dass wenigstens einer, bevorzugt mehrere, der folgenden Parameter einer Oszillation geprüft werden, wobei der Parameter ausgewählt ist aus der Gruppe bestehend aus: Amplitude der Oszillation, Periode der Oszillation, Gradientenverlauf der Amplitude der Oszillation, Varianz der Periode, Zunahme der Periode, Abnahme der Periode, Gradient einer Änderung der Periode, Andauern einer Oszillation länger als eine Grenzzeit, Frequenz der Oszillation, Frequenzbreite der Oszillation, Frequenzamplitude der Oszillation.

Bevorzugt wird darüber hinaus festgestellt, ob die Periode über den Erfassungszeitraum einen Periodenwert innerhalb eines Periodenbereichs hat. Anders ausgedrückt wird bevorzugt festgestellt, ob die Periode innerhalb eines Periodenbereichs liegt und mit einem unteren Periodengrenzwert und einem oberen Periodengrenzwert identisch ist oder zwischen diesen liegt. Bevorzugt kann ein unterer Periodengrenzwert des Periodenbereichs zwischen 0,05 s und 0,5 s liegen. Bevorzugt kann ein oberer Periodengrenzwert des Periodenbereichs zwischen 10 s und 30 s liegen. Die Weiterbildung hat erkannt, dass sich nur Periodenlängen innerhalb des Periodenbereichs sicher als solche zu identifizieren sind, die auf eine Instabilität hinweisen. Die Weiterbildung nutzt hier Erfahrungswerte aus der Regelung von Windenergieerzeugern.

Bevorzugt wird weiter festgestellt, dass die Periode über den Erfassungszeitraum, insbesondere über einen Grenzzeitwert, weitgehend anhält und insbesondere den Periodenwert vorzugsweise innerhalb des Periodenbereichs beibehält. Vereinfacht gesagt soll festgestellt werden, ob die Schwingung eine Oszillation darstellt mit einer weitgehend festen Periode, die innerhalb einer bestimmten Varianz liegt, jedenfalls aber eine Periode aufweist, die --einer Regelmäßigkeit folgend-- konstant ist, zunimmt oder abnimmt. Damit kann vergleichsweise gut jedenfalls ausgeschlossen werden, dass eine statistische oder parasitäre Schwingungslage vorliegt. Vorzugsweise kann ein Frequenzspektrum des zeitlichen Verlaufs aufgenommen werden, um festzustellen, ob eine bestimmte Frequenz innerhalb eines vorgegebenen Frequenzintervalls und/oder von ausreichender Amplitude und/oder mit einer Breite, innerhalb einer bestimmten Bandbreite, vorliegt.

Desweiteren hat es sich als vorteilhaft erwiesen, dass eine Amplitude der Oszillation über den Erfassungszeitraum einen Amplitudenwert oberhalb einer Schwellwertamplitude hat. Ist eine Oszillation mit einer Amplitude versehen, die derart stark ist, dass sie die Schwellwertamplitude übersteigt, wird vorteilhaft auf eine Instabilität geschlossen. Zusätzlich kann festgestellt werden, ob die Amplitude der Schwingung für einen Mindestzeitraum oberhalb einer unteren Schwellwertamplitude besteht; in dem Fall kann selbst im Falle eines Amplitudenwerts unterhalb der oberen Schwellwertamplitude auf ein Aufschwingungsverhalten geschlossen werden. Für ähnliche Analysen kann auch nur ein einziger Schwellamplitudenwert vorgesehen sein, bei dessen Überschreitung auf ein Aufschwingungsverhalten geschlossen wird.

Insbesondere hat es sich als voreilhaft erwiesen, dass zusätzlich festgestellt wird, dass die Amplitude über den Erfassungszeitraum einen Amplitudenwert hat, der zunimmt oder gegebenenfalls konstant ist. Beispielsweise kann festgestellt werden, ob der Gradient einer Einhüllenden der Oszillation positiv ist. Grundsätzlich ist es insbesondere bevorzugt, auf ein Aufschwingungsverhalten zu erkennen, wenn der Gradient oberhalb eines Amplitudengradienten liegt, vorzugsweise die Oszillation mit vergleichsweise hoher Amplitude und/oder schnell d.h. einem hohen Amplitudengradienten ansteigt.

Bevorzugt ist, dass ein Periodenintervall und/oder eine Schwellwertamplitude einerseits einer Windleistung, vorzugsweise Abgabeleistung, insbesondere Wirk- und/oder Blindleistung, und andererseits einer Netzspannung unterschiedlich festgelegt sind. Insbesondere hat es sich als vorteilhaft erwiesen, dass die Parameter zur Erkennung eines Aufschwingungsverhaltens der Windleistung enger gesetzt sind als diejenigen für eine Netzspannung. Auch diese Maßgabe beruht auf der Erfahrung mit Steuer- und Regelsystem für Windenergieanlagen einerseits im Vergleich zu andererseits einem Netzverhalten eines elektrischen Versorgungsnetzes.

Ein Regel- und Steuerverfahren sieht insbesondere vor, dass parasitäre und/oder normale Schwingzustände, insbesondere Schwingzustände der Abgabeleistung, bevorzugt der Blindleistung und/oder Wirkleistung und/oder der Netzspannung, ausgeschlossen werden, bevor ein Signal einen Aufschwingungszustand anzeigt. Dazu hat es sich als vorteilhaft erwiesen, zusätzlich ausschließende Prüfabfragen vorzusehen, die in der Lage sind konkret bekannte und regelgerechte Zustände zu erkennen. Dies hat den Vorteil, dass selbst bei Vorliegen aller vorgenannten Kriterien bestimmte Ausnahmesituationen nicht zu einer Signalisierung führen.

Im Rahmen einer besonders bevorzugten Weiterbildung kann bei Vorliegen eines einen Aufschwingungszustand anzeigenden Signals ein Regelparameter einer Regel- und/oder Steuereinrichtung und/oder einer Versorgungsnetzeinrichtung geändert werden. Bevorzugt wird der entsprechende Regelparameter gedrosselt. Die Erfahrung zeigt dass Situationen, in denen Regelparameter zu hoch und/oder zu eng an gewissen Grenzen und/oder mit einer zu steilen Rampe, angesetzt werden, ein Regelkreis instabil wird. Bevorzugt kann beispielsweise ein Gradient zur Anpassung einer Rampe gesenkt werden, um die Rampe flacher zu gestalten und/oder es kann ein Ausgabewert einer Regelschleife prozentual vermindert werden und/oder es kann ein Regelparameter niedriger angesetzt werden und/oder mit einem weiteren Abstand zu gewissen Grenzen angesetzt werden. Solche und andere Maßnahmen können bevorzugt vorgenommen werden, um ein Regelergebnis zu drosseln beziehungsweise eine Netz- und/oder Winderzeuger-Anlagenregeleinrichtung zu drosseln. Beispielsweise können die Dämpfung eines Reglers und/oder die Begrenzung eines Reglers und/oder eines Regelanteils vorgesehen sein, insbesondere kann die Begrenzung eines I-Anteils eines Reglers vorgesehen sein.

Bevorzugt wird eine Wirk- und/oder Blindleistung der Abgabeleistung überprüft. Insbesondere eine Prüfung eines Sollwerts der Blindleistung erfolgt aufgrund der Erkenntnis, dass sich die Blindleistung zur Unterstützung einer Netzstabilität eignet. Im Falle der Weiterbildung ist bevorzugt sichergestellt, dass jedenfalls die Blindleistung der Abgabeleistung nicht bereits infolge einer zu scharf angesetzten Regelung Unregelmäßigkeiten unterliegt. Jedenfalls in dieser Weise kann eine Netzstabilität mit verlässlichen Blindleistungswerten unterstützt werden

Im Rahmen einer bevorzugten Weiterbildung werden selbst über den Erfassungszeitraum hinaus die Abgabeleistung und die Netzspannung ständig überwacht, insbesondere gemessen. Gegebenenfalls kann auch ein ständiger Prüfvorgang angesetzt werden, der praktisch ohne Zeitbegrenzung die Abgabeleistung und die Netzspannung hinsichtlich eines Schwingungsverlaufs prüft.

Weitere Einzelheiten und Vorteile der Erfindung sind in den Ausführungsbeispielen gemäß der Zeichnung offenbart. Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
- Fig. 1: schematisch eine Windenergieanlage;
- Fig. 2: schematisch einen Windpark;
- Fig. 3: schematisch eine Windparksteuerung in Verbindung mit einem Windpark, z. B. der Fig. 2;
- Fig. 4: einen generellen Aufbau eines Reglers mit einem Regelmodul, das parametrisierbar besonders bevorzugt als Abgabeleistungsmodul (insbesondere Wirkleistungsregelmodul oder Blindleistungsmodul) genutzt werden kann; dies ggfs. nach einer internen Vorgabewert-Bestimmung für eine Abgabeleistung im Rahmen einer Abgabeleistungsregelung;

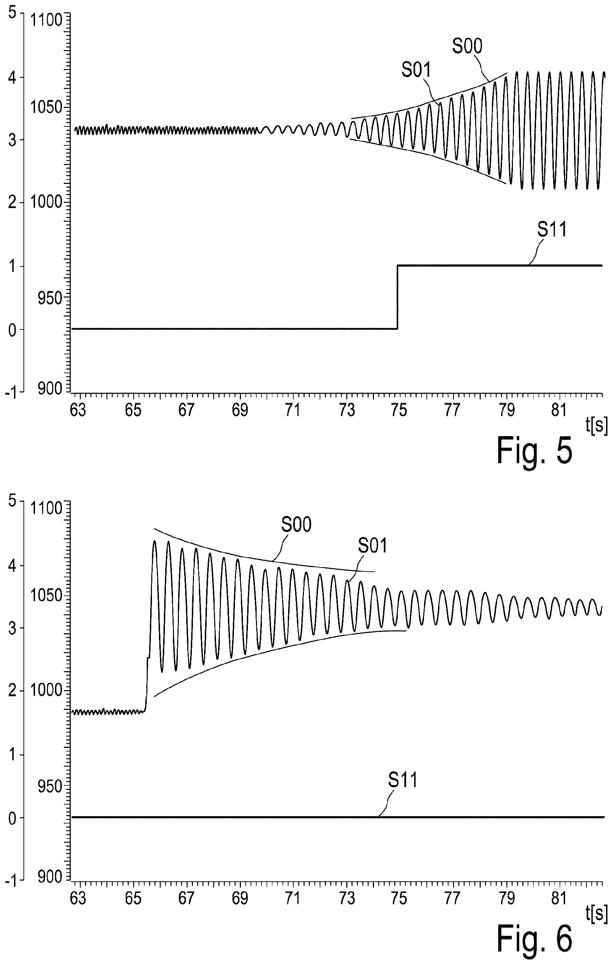

- Fig. 5: einen erster beispielhaften Verlauf einer aktuellen Netzspannung eines elektrischen Versorgungsnetzwerkes normiert auf eine Nennspannung einer Windenergieanlage (1000 = 100 %), wobei eine sich aufschwingende Oszillation erkannt wird und eine Aufschwingungserfassung den Wert "1" für eine Positiverkennung ausgibt;
- Fig. 6: ein analog aufgetragener zweiter beispielhafter Verlauf einer Netzspannung des elektrischen Versorgungsnetzwerkes normiert auf eine Nennspannung der Windenergieanlage (1000 = 100 %), wobei nicht auf eine sich aufschwingende Oszillation erkannt wird und eine Aufschwingungserfassung entsprechend den Wert "0" für eine Negativerkennung ausgibt;

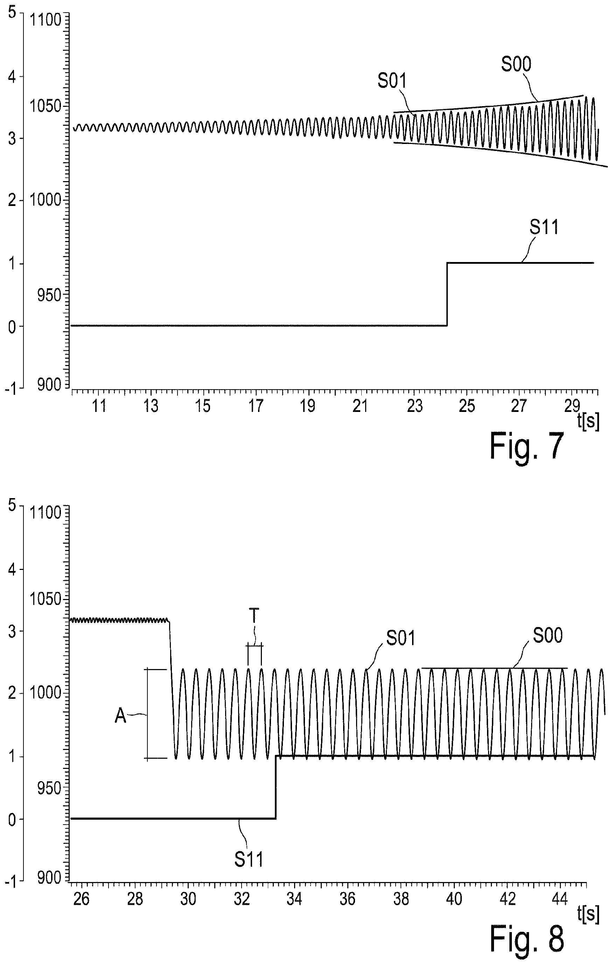

- Fig. 7: ein analog aufgetragener dritter beispielhafter Verlauf einer Netzspannung des elektrischen Versorgungsnetzwerkes normiert auf eine Nennspannung der Windenergieanlage (1000 = 100 %), wobei erst zu einem vergleichsweise späten Zeitpunkt auf eine sich aufschwingende Oszillation erkannt wird und eine Aufschwingungserfassung den Wert "1" für eine Positiverkennung zurückgibt;
- Fig. 8: ein analog aufgetragener vierter beispielhafter Verlauf einer Netzspannung des elektrischen Versorgungsnetzwerkes normiert auf eine Nennspannung der Windenergieanlage (1000 = 100 %), wobei im Falle einer konstanten aber vergleichsweise lang anhaltenden Oszillationsamplitude wiederum auf eine sich aufschwingende Oszillation erkannt wird und eine Aufschwingungserfassung und den Wert "1" für eine Positiverkennung zurückgibt;

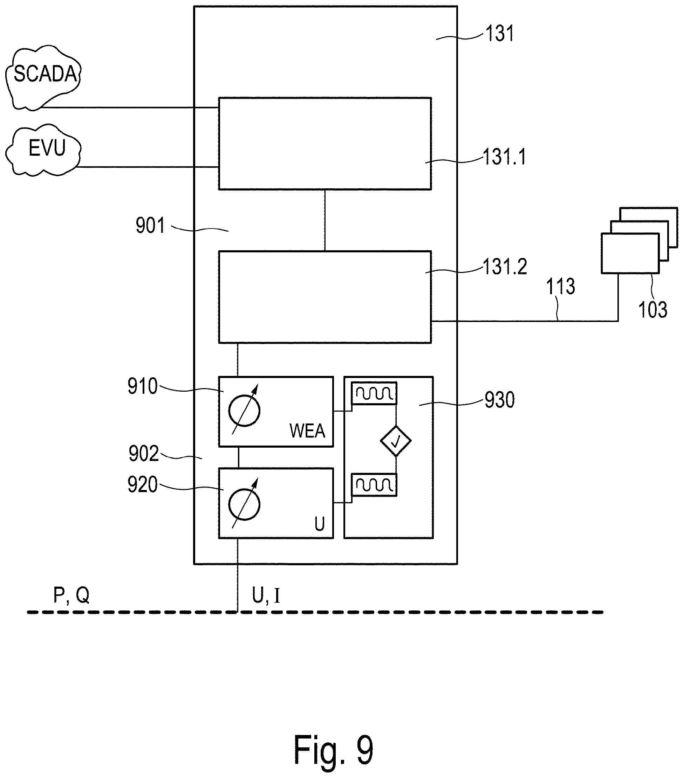

- Fig. 9: den prinzipiellen Aufbau einer Windparksteuer- und -regeleinrichtung für einen Windpark der Fig. 3 mit einer Windparksteuerung-Organisationseinheit und einem Windparksteuerung-Steuer- und Regelmodul, sowie einem daran angebundenen Windparksteuerung-Mess- und Auswertemodul und einer Windparksteuerung-Aufschwingungserfassung;

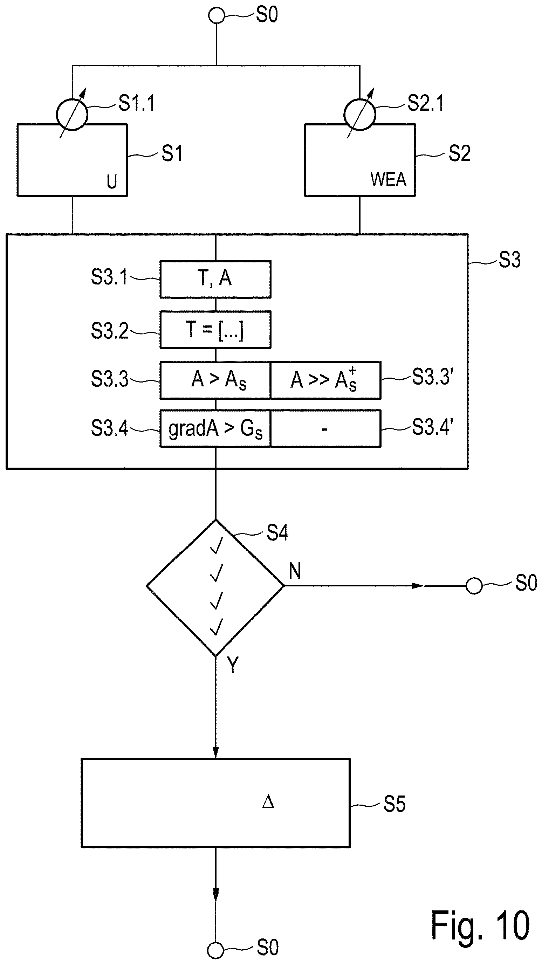

- Fig. 10: einen Verfahrensablauf zur Umsetzung einer bevorzugten Aufschwingungserfassung bei einem Betrieb einer Windenergieanlage und/oder eines Windparks, wobei der Verfahrensablauf insbesondere mit einer Windparksteuer- und -regeleinrichtung der Fig. 9 umsetzbar ist.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Windparknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Netzverknüpfungspunkt 118, der auch als PoC (Point of Connection) bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Windparknetz 114 anders gestaltet sein, in dem beispielsweise auch ein Transformator am Ausgang jeder Windenergieanlage 100 vorhanden ist, um nur ein anderes Ausführungsbeispiel zu nennen.

Fig. 3 zeigt eine Übersicht über ein Windparksteuerungssystem 130 bei einem schematischen Aufbau des Windparks 112 mit einer Anzahl von Windenergieanlagen WEA. Die Windparksteuerung 131 ist eine übergeordnete Windpark-Steuer- und Regeleinheit. Bezugspunkt dieser Steuerung und/oder Regelung ist ein projektspezifisch definierter Referenzpunkt. Üblicherweise ist dieser identisch mit dem Netzverknüpfungspunkt 118 des Windparks 112 am Mittel- bzw. Hochspannungsnetz; also dem Versorgungsnetz 120. Üblicherweise ist der Netzverknüpfungspunkt 118 ein Umspannwerk oder eine Übergabestation. Eine jede der Windenergieanlagen WEAi (hier i=1..4) gibt Wirk- und Blindleistung Pi, Qi (hier i=1..4) ab, die in das Windparknetz 114 abgegeben werden und als gesamte Wirk- und Blindleistung P, Q über den Transformator 116 an den Netzverknüpfungspunkt 118 zur Abgabe an das elektrische Versorgungsnetz abgegeben wird.

Die Windparksteuerung 131 hat am Netzverknüpfungspunkt 118 die Möglichkeit zur Spannungs- und Strommessung, wie dies noch weiter in Bezug auf Fig. 9 gezeigt und erläutert ist.

Vorliegend ist ein Windparksteuerungssystem 130 gebildet aus einer zentralen Einheit (Hardware und Software) einer Windparksteuerung 131 am Netzverknüpfungspunkt 118 und einer SCADA-Windparksteuerung 132, die auch mit einem Kontrollraum 133 des Netzbetreibers steuerverbunden sind. Die Datenkommunikation zu den Windenergieanlagen WEAi erfolgt über einen eigenen Datenbus, den Windparksteuerungs-Bus. Dieser ist parallel zum Scada-Bus aufgebaut. Die Windparksteuerung 131 fordert zyklisch Informationen der einzelnen Windenergieanlagen WEAi an und muss diese für jede der Windenergieanlagen WEAi (hier i=1..4) im Speicher vorhalten.

Es können Prioritäten zwischen der Windparksteuerung 131 und einer SCADA-Windparksteuerung 132 festgelegt werden. Die Windenergieanlage 100 kann ohne übergeordnete Steuerung oder Regelung an einem Netzverknüpfungspunkt 118 einspeisen. Allerdings haben sich zwei übergeordnete Windpark-Steuerungen und/oder -Regelungen 131, 132 bewährt. Daher gibt es verschiedene Kombinationen für die Einspeisung. Die Einstellungen für die unterschiedlichen Funktionen werden an einer Steuerplatine der Windenergieanlage 100 mittels einer Eingabevorrichtung wie z. B. einem Touchpanel oder einem PC vorgenommen. Ist keine der übergeordneten Windparksteuerung und/oder Regelung aktiviert (z.B. Windparksteuerung 131 oder SCADA-Windparksteuerung 132), werden die fest in der Steuerplatine festgelegten Vorgaben verwendet. Soll eine Windparksteuerung und/oder Regelung verwendet werden, muss dieses über die Parameter an der Steuerplatine als Einstellung aktiviert werden. Aus diesen Einstellungen ergeben sich vier verschiedene Kombinationen:
- Keine Parkregelung
- Windparksteuerung (und/oder Regelung) 131
- SCADA-Windparksteuerung (und/oder Regelung) 132
- Windparksteuerung (und/oder Regelung) 131 und SCADA-Windparksteuerung (und/oder Regelung) 132

Die übergeordneten Steuerungen/Regler können auf wenigstens drei verschiedene wesentliche Größen Einfluss nehmen:
- Maximale Wirkleistung der Anlage (Pmax),
- die Blindleistung, dazu zählen auch Steuerungen wie die von "Q zu P";
- und die Frequenzvorhalteleistung, (dies bei aktivierter Frequenzregelung).

In jeder Windenergieanlage 100 wird eine Empfängereinheit, die hier als Windenergieanlagen-Schnittstelle 103 bezeichnet ist, installiert. Die Windenergieanlagen-Schnittstelle 103 ist die Schnittstelle der Windparksteuerung 131 in der Windenergieanlage WEAi. Als Empfangsschnittstelle in jeder der Windenergieanlagen WEAi dient eine Platine der Windenergieanlagen-Schnittstelle 103. Sie empfängt die von der Windparksteuerung 131 vorgegebenen Sollwerte, wandelt sie um, und gibt die Informationen weiter an die Windenergieanlagen WEAi. Diese Windenergieanlagen-Schnittstelle 103 nimmt die Stellgrößen der Windparksteuerung 131 auf und leitet diese an die Windenergieanlage WEAi weiter. Des Weiteren übernimmt sie die Überwachung der Datenkommunikation des Windparksteuerung-Bus 113 und organisiert den Vorgabemodus bei einem gestörten Datenbus oder beim Ausfall der Windparksteuerung 131; ggfs. mit einer in Fig. 9 weiter gezeigten Windparksteuerung-Organisationseinheit 131.1.

Die Windparksteuerung 131 misst am Netzverknüpfungspunkt 118 die Spannung U und den Strom I, ggfs. mit einer in Fig. 9 weiter gezeigten Netzmesseinheit 920. Eine Steuerplatine mit analogen Eingängen und Mikroprozessoren in der Windparksteuerung, insbesondere Steuerungseinheit, 131.2 analysiert das Netz und berechnet die entsprechenden Spannungen, Ströme und Leistungen.

Die Windparksteuerung 131 stellt einen gewissen Arbeitsbereich zur Verfügung, der mit relevanten Hardwaretechnischen Windpark- bzw. Hardware- Parametern eingestellt werden kann. Einige der Einstellungen betreffen beispielsweise Angaben zur Nennspannung und/oder zum Nennstrom auf der Niederspannungsebene, der Mittelspannungsebene und/oder Hochspannungsebene, die Angabe einer Parknennwirkleistung, die Angabe einer Parknennblindleistung, die Angabe der Netzfrequenz, die Angabe der Anzahl von Windenergieanlagen im Park, sowie diverse Einstellungen von Sonderfunktionen, Sollwertvorgaben und Angaben zur Datenkommunikation bzw. Steuerung.

Weiterhin können folgende Parameter festgelegt werden, wie Filterzeitkonstanten, Regler-Reset-Optionen, Netzfehler Unterspannung/Überspannung, Vorgabewert-Rampen; auch können die Grenzen definiert werden, die einmal als Vorgabewert zugelassen werden oder beispielsweise Mindest- und Maximalleistungen einer Windenergieanlage, sowie Begrenzungen von Ausgangswerten für eine Blindleistung, Wirkleistung Phasenwinkel, als auch Begrenzungswerte für maximale oder minimale Sollwertvorgaben betreffend Spannung, Wirk- und Blindleistung, Phasenwinkel als auch Begrenzungswerte für Sollwertvorgaben von externer Seite.

Auch können alle Standardvorgabeeinstellungen der Windparksteuerung 131 vorgenommen werden; es gibt für jeden Vorgabewert einen Standardvorgabewert.

Regler sind in zwei grundsätzliche Teile strukturiert, wobei jeder beispielsweise einen bevorzugten Regleraufbau in der Fig. 4 haben kann:
1. Regelung und/oder Steuerung zur Wirkleistung: Wirkleistungsregler, Leistungsgradientenregler, Leistungsfrequenzregler, Leistungssteuerung, und weitere.
2. Regelung und/oder Steuerung zur Blindleistung: Spannungsregler, Blindleistungs-Regler, Phasenwinkel-Regler, Sonderregler, Blindleistungssteuerung.

Die Windparksteuerung 131 ist so aufgebaut, dass verschiedene Reglertypen ausgewählt werden können, insbesondere für verschiedene Grundtypen für die Wirkleistung:
Typ 1: Kein Wirkleistungsregler (nur Vorgabe einer Maximal- und/oder Reserveleistung)
Typ 2: Wirkleistungssteuerung (direkte Vorgabe einer Maximal- und/oder Reserveleistung)
Typ 3: Wirkleistungsregler ohne Frequenzabhängigkeit von der Netzfrequenz (ohne P(f) - Funktionalität)
Typ 4: Wirkleistungsregler mit Frequenzabhängigkeit von der Netzfrequenz (mit P(f) - Funktionalität)

Beispielsweise ist in Fig. 4 ein bevorzugter Aufbau eines Leistungsreglers, insbesondere Wirkleistungsreglers, gezeigt. Allgemein können Regler nach stetigem und unstetigem Verhalten unterschieden werden. Zu den bekanntesten stetigen Reglern gehören die "Standardregler" mit P-, PI-, PD- und PID-Verhalten. Stetige Regler mit analogem oder digitalem Verhalten können für lineare Regelstrecken verwendet werden. Ein P-Regler hat eine gewählte Verstärkung; wegen des fehlenden Zeitverhaltens reagiert der P-Regler unmittelbar, jedoch ist sein Einsatz begrenzt, weil die Verstärkung je nach Verhalten der Regelstrecke reduziert werden muss. Außerdem bleibt ein Regelfehler einer Sprungantwort nach dem Einschwingen der Regelgröße als "bleibende Regelabweichung" bestehen, wenn kein I-Glied in der Strecke enthalten ist. Ein an sich bekannter Regler ist der I-Regler (integrierender Regler, I-Glied) zur Bestimmung eines I-Anteils, dessen Sprungantwort im I-Anteil sich durch zeitliche Integration der Regelabweichung auf die Stellgröße mit der Gewichtung durch die Nachstellzeit ergibt; eine Verstärkung ist invers zur Nachstellzeit. Eine konstante Regeldifferenz führt von einem Anfangswert des Ausgangs zum linearen Anstieg des Ausgangs bis zu seiner Begrenzung. Der I-Regler ist ein langsamer und genauer Regler; durch seine (theoretisch) unendliche Verstärkung. Er hinterlässt keine bleibende Regelabweichung, jedoch kann nur eine schwache Verstärkung bzw. eine große Zeitkonstante eingestellt werden.

Bekannt ist der sogenannte Wind-up-Effekt bei Großsignalverhalten. Wenn beim I-Regler die Stellgröße durch die Regelstrecke begrenzt wird, tritt ein sogenannter Wind-up-Effekt auf. Dabei arbeitet die Integration des Reglers weiter, ohne dass die Stellgröße zunimmt. Wird die Regelabweichung kleiner, entsteht beim Rücklauf eine ungewollte Verzögerung der Stellgröße und damit der Regelgröße. Dem kann man mit der Begrenzung der Integration auf die Stellgrößen-Grenzen entgegentreten (Anti-wind-up). Als eine mögliche Anti-Wind-Up-Maßnahme wird der I-Anteil bei Erreichen der Eingangsgrößenbeschränkung auf dem letzten Wert eingefroren (z.B. durch Absperrung des I-Gliedes). Wie bei jedem Begrenzungseffekt innerhalb eines dynamischen Systems verhält sich der Regler dann nichtlinear. Das Verhalten des Regelkreises ist durch numerische Berechnung zu prüfen.

Im Rahmen eines PI-Reglers (proportional-integral-controller) gibt es Anteile des P-Gliedes und des I-Gliedes mit der Zeitkonstante. Er kann sowohl aus einer Parallelstruktur oder aus einer Reihenstruktur definiert werden. Signaltechnisch wirkt der PI-Regler gegenüber dem I-Regler so, dass nach einem Eingangssprung dessen Wirkung um die Nachstellzeit vorverlegt ist. Durch den I-Anteil wird die stationäre Genauigkeit gewährleistet, die Regelabweichung wird nach dem Einschwingen der Regelgröße zu Null. So ergibt sich keine Regelabweichung bei konstantem Sollwert. Durch das I-Glied wird im stationären Zustand bei konstantem Sollwert die Regelabweichung zu Null. Es kann auch ein PID Regler unter Kombination mit einem D-Anteil gebildet werden. Das D-Glied ist ein Differenzierer, der normaler weise nur in Verbindung zu Reglern mit P- und/oder I-Verhalten als Regler eingesetzt wird. Er reagiert nicht auf die Höhe der Regelabweichung, sondern nur auf deren Änderungsgeschwindigkeit. Eine Anstiegsfunktion ruft ein konstantes Ausgangssignal am D-Glied hervor. Die Größe des Ausgangssignals ist von dem Produkt Anstiegskonstante und Differenzierbeiwert abhängig.

Grundlage einer Regelung der Fig. 4 einer Windparksteuerung 131, z. B. der Fig. 3, ist die Netzmessung, vorzugsweise unter Einstellung von Filterzeitkonstanten. Die Windparksteuerung 131 misst am Netzverknüpfungspunkt 118 drei Netzspannungen (gegen den Neutralleiter bzw. dem Erdpotenzial) und drei Phasenströme. Daraus wird ein Raumzeiger gebildet und entsprechend der Netzqualität gefiltert. Dieses Filter kann mit einer Filterzeitkonstante und einer Reihe von Parametern eingestellt werden. Die grundsätzliche Reglerstruktur kann auf sogenannte Module zurückgreifen, von denen eines in Fig. 4 gezeigt ist, wie erwähnt für das Beispiel eines Wirkleistungsreglers. Eine Anzahl verketteter solcher oder anderer Module hintereinander kann dann die für das jeweilige Projekt benötigte Funktion bilden. Sogenannte Vorgabewerte 404 (auch "Setpoints") sind bevorzugt Sollwerte für die Regler. Die Windparksteuerung 131 bietet für alle relevanten Sollwerte einen Wert an, so z.B. einen Spannungssollwert, einen Blindleistungssollwert, einen Phasenwinkel(Phi)-Sollwert, einen Wirkleistungssollwert, einen Leistungsvorhaltesollwert, insbesondere netzfrequenzabhängig (P(f) - Funktion).

Für jeden Sollwert werden in der Windparksteuerung 131, insbesondere einer Windparksteuerung-Steuerungseinheit 131.2 der Fig. 9, Grenzen (Min-Max-Werte) festgelegt. Die Vorgabe solcher Sollwerte können direkt an der Windparksteuerung 131 vorgegeben oder über eine externe Schnittstelle übertragen werden. Zur Vorgabe 400 von Vorgabewerten 404 mittels einer Sollwertvorgabe werden erst einige Stufen durchlaufen, bis der Wert als Eingangsgröße am eigentlichen Regelmodul 501 des Reglers 500 zur Verfügung steht. An einer Sollwertgenerierung 401 wird ein vorläufiger Sollwert generiert, entweder direkt an der Windparksteuerung 131 oder über eine externe Sollwertschnittstelle. Dieser vorläufige Sollwert durchläuft eine Begrenzung 402 mit einem Maximalwert und Minimalwert (hier für eine Wirkleistung mit einem Pmax- und Pmin-Wert). Diese sind als Parameter in der Windparksteuerung 131 hinterlegt. Der daraus resultierende Sollwert durchläuft eine sogenannte Sollwertrampe 403. Die Sollwertrampe soll schlagartige Sollwertänderungen verhindern. Parameter sind in der Windparksteuerung 131 fest vorgegebene Einstellungen bzw. Werte, die nur an der Steuerung selbst eingestellt werden können. Diese werden dann auf der Steuerung gespeichert. Sie dienen als Betriebsparameter und definieren somit das Verhalten der Windparksteuerung 131 und somit des Reglers.

Anschließend bekommen die Windenergieanlagen 100 das gleiche Stellsignal (POutput) aus dem Regelmodul 501 gemäß Vorgabe der Soll-Abgabeleistung 503. Dadurch werden bei einer Leistungsreduzierung in 502 zuerst diejenigen Anlagen begrenzt, die auch gerade mehr Leistung produzieren. Der grundsätzliche Regleraufbau 500 ist selbst bei Verwendung eines funktionsspezifisch abgewandelten bzw. ergänzten Regelmoduls im Vergleich zu dem der Fig. 4 grundsätzlich gleich. Die Eingangsgröße (hier P-Soll (entweder direkt an der Windparksteuerung 131 eingegeben oder durch die externe Schnittstelle vorgegeben) kann --im Rahmen einer Vorgabewertbestimmung 400-- auf die Parknennleistung (P-nominal) normiert werden. Danach werden die eingestellten Grenzen des Vorgabewerts in der Begrenzung 402 überprüft (diese sind als Parameter in der Windparksteuerung 131 hinterlegt Pmin, Pmax). Dieser Sollwert wird bei einer Sollwertänderung nicht sofort übernommen, sondern mit einer entsprechenden Sollwertrampe (sogenannte "Setpoint-Ramp") 403 verändert. Die Rampensteilheit ist wiederum ein Parameter in der Windparksteuerung 131. Der resultierende Wert dient dann wie erläutert als Vorgabewert 404 für den eigentlichen Regler 500 mit Regelmodul 501; hier für das Beispiel der Wirkleistung. Die zurückgemessene Leistung (Plst) am Netzverknüpfungspunkt 118 dient als Ist-Größe für das Regelmodul 501. Diese Größe kann je nach Parametrierung gefiltert werden. Die Ist-Leistung 504 kann auch auf Windparknennleistung (P-nominal) normiert werden. Das Regelmodul 501 des Reglers 500 für Wirkleistung gemäß Fig. 4 (oder z. B. ganz analog für Blindleistung) ist ein eigenständiges Modul, welches von verschiedenen Reglern aufgerufen werden kann oder bei anderen Reglern als vereinfachtes Modul verwendet werden kann.

Solche Regleraufbauten der Fig. 4 und andere Regleraufbauten können nicht nur inhärent per vorerwähntem reglerbedingtem WindUp sondern auch anlagenspezifisch instabil werden; Möglichkeiten mit denen zu rechnen ist, sind in Fig. 5 bis Fig. 8 gezeigt. Zur Erkennung eines Aufschwingverhaltens einer Windenergieanlage und/oder eines Windparks wird zum einen eine Netzspannung überwacht. Zur Verdeutlichung der Funktion und zur Fehlerauswertung einer Schwingung sind in Fig. 5 bis Fig. 8 Beispiele aufgezeigt. Als Reaktion darauf kann eine Aufschwingungserfassung ein entsprechendes Signal einer Positiverkennung "(1)" oder Negativerkennung "(0)" ausgeben. Insofern ist in Fig. 5 bis Fig. 8 das Signal "S01", die aktuelle Netzspannung, normiert auf die Nennspannung * 1000 (=100,0 %); das Signal "S00" bezeichnet die entsprechende Einhüllende, welche die Amplitudenwerte des oszillierenden Signals "S01" verbindet. Das Signal "S11" ist das Ergebnis aus der Schwingungsanalyse der Aufschwingungserfassung (0=OK, 1=Schwingung erkannt).

In Fig. 5 liegt die Netzspannung bei 1,040 (d. h. 4 % Überspannung) bevor die Schwingung beginnt. In der Aufschwingungserfassung wird der Wert "(1)"ausgegeben, was heißt, dass eine Schwingung erkannt ist, die vergleichsweise sicher ein Aufschwingungsverhalten darstellt. Ein Aufschwingungszustand wird --im Falle der Fig. 5 wie auch im Falle der Fig. 7-- erkannt, wenn auf eine Oszillation mit einer beständigen Periode erkannt wird für die eine steigende Amplitude festgestellt wird.

Dies ist zunächst unabhängig von der absoluten Größe der Amplitude; spätestens bei einem vergleichsweise späten Zeitpunkt gemäß Fig. 7 überschreitet die Amplitude eine untere Schwellwertamplitude, sodass auch in diesem Fall dann auf einen Aufschwingungszustand erkannt und ein entsprechendes Signal ausgegeben wird. Fig. 7 zeigt eine sehr langsam aufschwingende Oszillation der Netzspannung mit geringer Frequenz. In der Aufschwingungserfassung wird der Wert "(1)" ausgegeben; das heißt, dass eine Schwingung erkannt ist, die vergleichsweise sicher ein Aufschwingungsverhalten darstellt.

Fig. 8 zeigt eine gleichbleibende Oszillation nach einer Sollwertänderung. In der Aufschwingungserfassung wird der Wert "(1)" ausgegeben, was heißt, dass eine Schwingung erkannt ist, die vergleichsweise sicher ein Aufschwingungsverhalten darstellt. Auch im Falle des Beispiels der Fig. 8 wird nach einer Sollwertänderung auf einen Aufschwingungszustand erkannt. Im Falle einer hier vorliegenden konstanten Periode und Amplitude ist auf einen unerwünschten Zustand zu schließen, bereits aufgrund des langanhaltenden Verlaufs der Oszillation. Im vorliegenden Fall ist zudem die Amplitude der Oszillation oberhalb einer unteren Schwellwertamplitude gegeben, sodass sicher auf einen Aufschwingungszustand signalisiert werden kann.

Fig. 6 zeigt zum Anderen das Verhalten bei einem scharf parametrierten Regler nach einer Sollwertänderung (von 0,95 auf 1,04). In der Aufschwingerfassung wird der Wert "(0)" ausgegeben, was heißt, dass eine Schwingung erkannt ist, die vergleichsweise sicher kein Aufschwingungsverhalten darstellt; bzw. vereinfacht gesagt, wird keine Schwingung erkannt. Im Falle der Fig. 6 kann selbst im Falle eines Überschreitens einer unteren Schwellwertamplitude nicht auf einen Aufschwingungszustand erkannt werden, da ein Gradient des Amplitudenverlaufs negativ ist.

Das hier beispielhaft erläuterte Konzept enthält somit eine Auswertung, bei welcher erkannt wird, ob die Schwingung zunimmt, konstant bleibt oder abklingt. Zum Beispiel neigt ein scharf parametrierter Regler bei einer Sollwertänderung zum überschwingen. Die Schwingung der Fig. 6 ist abklingend und darf daher nicht zu einem Status führen, der als ein Aufschwingungszustand signalisiert wäre; vielmehr ist ein solcher Zustand gemäß Fig. 6 unbeachtlich im Vergleich zu einem Zustand in Fig. 5, Fig. 7 und Fig. 8.

Fig. 9 zeigt eine in Fig. 3 dargestellte Windparksteuerung 131 im Detail, nämlich mit einer Windparksteuerung-Organisationseinheit 131.1 ("Management") und einer Windparksteuerung-Steuerungseinheit (und/oder Regeleinheit) 131.2 ("Control"). Die Windparksteuerung-Organisationseinheit 131.1 organisiert unterschiedliche Steuereinheiten wie beispielsweise eine SCADA-Steuerung oder eine Steuerung 133 der EVU (Energieversorgungsunternehmen), welche insbesondere die Netzzustände beobachten; insofern ist die Windparksteuerung-Organisationseinheit 131.1 für eine Priorisierung oder Koordinierung unterschiedlicher Steuervorgaben zuständig. Die eigentliche Windparksteuerung-Steuerungseinheit (und/oder Regeleinheit) 131.2 erhält über einen Windparksteuerung-Bus 113 Signale einer Windparksteuerungsschnittstellen 103 der Windenergieanlage WEAi (hier 1=1..4) oder gibt Signale an die Windparksteuerungsschnittstellen 103 aus. Darüber hinaus weist die Windparksteuerung 131 vorliegend eine Anzahl von Regelmodulen auf, wie eines prinzipiell in Fig. 4 gezeigt ist; nämlich zur Umsetzung geeigneter Steuer- und Regelvorgaben wie diese oben u.a. in Bezug auf Fig. 4 beschrieben sind. Diese können die genannten Anfälligkeiten bzw. eine Neigung zu Aufschwingungsvorgängen im Falle einer nur bedingt gegebenen Anpassung eines Reglers auf eine Regelstrecke (Windenergieanlage) haben. Ein solches in Fig. 9 gezeigtes Steuer- und Regelmodul 901 dient zum Vorgeben eines Leistungsregeleingangswertes und Bestimmen eines Leistungsregelausgangswertes aus dem Leistungsregeleingangswert sowie Ausgeben des Leistungsregelausgangswertes.

Außerdem weist die Windparksteuerung 131 ein Mess- und Auswertemodul auf; dies mit mehreren Einheiten des Mess- und Auswertemoduls 902. Das Mess- und Auswertemodul 902 weist dementsprechend eine Anlagenmesseinheit 910 und eine Netzmesseinheit 920 auf, die beide mit einer Ausschwingungserfassungseinheit 930 signalverbunden sind Das Anlagenmesseinheit 910 ist ausgebildet, Ist-Werte und Soll-Werte des Steuer- und Regelmoduls 901 zu erfassen und diese der Aufschwingungserfassungseinheit 930 zuzuführen. Die Netzmesseinheit 920 ist ausgebildet, am Netzverknüpfungspunkt 118 die Netzspannung U und/oder einen Netzstrom I zu messen und entsprechende Ergebnisse der Aufschwingungserfassungseinheit 930 zuzuführen.

Fig. 10 zeigt schematisch ein Verfahren mittels dem als Sicherheitsmaßnahme Aufschwingungszustände einer Windenergieanlage WEA (z. B. gemäß Fig. 1) und /oder eines Windparks (z. B. gemäß Fig. 2) vergleichsweise sicher als echte Oszillationen erkannt werden können; insbesondere eben solche, die ihre Ursache in der Betriebsweise der Windenergieanlage 100 und/oder des Windparks 112 in Ankopplung an das elektrische Versorgungsnetz 120 haben. Der Aspekt einer Aufschwingungserfassung nur für einen solchen Schwingungsverlauf, der sich als echte sich aufschwingende Oszillation bei einer Windenergieanlage und/oder einem Windpark in Ankopplung an das elektrische Versorgungsnetz erweist, ist vom vorliegenden Konzept als besonders relevant erkannt worden. Denn es gibt eine Reihe von Schwingungsphänomenen einer Spannung und/oder eines Stroms des Versorgungsnetzes 120 selbst, die sich ggf. nicht durch eine Änderung oder Drosselung von Parametern der Windenergieanlage 100 und/oder des Windparks 112 ändern lassen. Insofern erweist es sich im Rahmen der vorliegenden Ausführungsform eines Verfahrens zur Aufschwingungserfassung als vorteilhaft, dass solche parasitären oder normalen oder gewünschten Schwingungszustände als unerheblich unberücksichtigt bleiben.

Als ein besonders markantes Fallbeispiel zur Anwendung des nachfolgend erläuterten Verfahrens zur Aufschwingungserfassung sei eine Situation gegeben, in welcher ein Windpark noch nicht fertiggestellt ist oder im fertigen Zustand mit einer Windparksteuerung 131 (z. B. gemäß Fig. 3) versehen ist, deren Stellverhalten getestet werden soll. Dazu können die Parameter der Windparksteuerung 131 oder Steuerung einer Windenergieanlage temporär erhöht bzw. schärfer eingestellt werden. Dies führt zu einem verbesserten Stellverhalten der jeweiligen Windparksteuerung 131, so dass im Rahmen eines Tests die Reaktionsfähigkeit der Windparksteuerung 131 auf Gegebenheiten des elektrischen Versorgungsnetzes 120 besonders verlässlich getestet werden können. Im regulären Betrieb erweisen sich solche als zu scharf eingestellten Parametereinstellungen der Windparksteuerung 131 jedoch als weniger angebracht und es kann zu Regelphänomenen mit oszillierendem Verhalten führen, die im Rahmen der vorliegenden Aufschwingungserfassung erfasst und beseitigt werden.

### 1. Oszillation einer Netzspannung U des elektrischen Versorgungsnetzes 120

Die Netzspannung U (insbesondere eine verkettete Netzspannung, nach Raumzeigermethode) wird ständig mit einer Aufschwingungserfassungseinheit 930 der Fig. 9 auf ein oszillierendes Verhalten überwacht. Dadurch soll erkannt werden, wenn ein Regelalgorithmus (Spannungsregler, Blindleistungsregler) instabil wird. Dieses könnte unter Umständen mit Hinweis auf die Möglichkeiten der Fig. 5 bis Fig. 8 vorkommen, wenn Regelparameter zu scharf eingestellt sind oder auch wenn sich Netzzustände ändern oder wenn Sollwertvorgaben geändert werden.

Der Algorithmus zur Erkennung einer Oszillation beobachtet gemäß Fig. 10 das Signal einer Netzspannung und versucht ein Aufschwingen zu erkennen. Dabei gibt es gewisse Randbedingungen, die bevorzugt gemäß dem hier beschriebenen Konzept vorliegen sollten:
- die Oszillation einer Netzspannung im Versorgungsnetz 120 sollte periodisch sein;
- es werden bevorzugt Schwingungen der Netzspannung im Versorgungsnetz 120 zwischen 100ms und 20s erkannt;
- die Amplitude der Schwingungen der Netzspannung im Versorgungsnetz 120 sollte einen gewissen Wert überschreiten;
- die Schwingungen der Netzspannung im Versorgungsnetz 120 sollte zunehmen; abklingende Oszillationen werden ignoriert.

### 2. Oszillation einer Blindleistung (Q-Soll) bei einer Windenergieanlage (WEA):

Der Blindleistungs-Sollwert einer Windenergieanlage WEA (Sollwert für die WEA, Ausgangsgröße aus der Windparksteuerung 131) wird ständig auf ein oszillierendes Verhalten überwacht. Dadurch soll erkannt werden, wenn ein Regelalgorithmus (Spanungsregler, Blindleistungsregler) instabil wird. Dieses könnte unter Umständen mit Hinweis auf die Möglichkeiten der Fig. 5 bis Fig. 8 vorkommen, wenn Regelparameter zu scharf eingestellt sind oder auch wenn sich Netzzustände ändern oder wenn Sollwertvorgaben geändert werden.

Im Prinzip kann ein ähnlicher Algorithmus verwendet wie er im Fall einer Oszillation einer Netzspannung U im Fall einer Oszillation einer Netzspannung U beschrieben ist. Im vorliegenden Fall sind jedoch die Auswertekriterien anders angepasst worden. D. h. gemäß Fig. 10 gibt es hier ebenfalls gewisse Randbedingungen:
- die Oszillation der Blindleistung (Q-Soll) sollte periodisch sein;
- es werden bevorzugt nur Schwingungen der Blindleistung zwischen 100 ms und 20 s erkannt;
- die Amplitude der Schwingung der Blindleistung sollte einen gewissen Wert überschreiten;
- die Schwingung der Blindleistung sollte zunehmen; abklingende Oszillationen werden ignoriert.
- die Aussteuerung sollte größer sein, als bei der Überwachung der Netzspannung U. Hintergrund ist, dass der Blindleistungsregler evtl. andere Schwingungen kompensieren soll.

Gemäß Fig. 10 kann in einem startenden Verfahrensschritt S0 die Aufschwingungserfassung aktiviert werden; dies erweist sich insbesondere bei einer vorbeschriebenen Situation als sinnvoll. Insbesondere kann dadurch vermieden werden, dass im Falle einer Aktivierung beim Übergang zu einem regulären Betrieb ein zu scharf eingestellter Parametersatz der Windparksteuerung 131 gedrosselt wird bzw. in einen regulären Parametersatz überführt wird.

Dazu wird in einem weiteren ersten Schritt S1 ein zeitlicher Verlauf der Netzspannung U des elektrischen Versorgungsnetzes 120 über einen ersten Erfassungszeitraum erfasst. Dies erfolgt vorliegend im Rahmen einer Messung S1.1 am Netzverknüpfungspunkt 118 zum elektrischen Versorgungsnetz 120. Diese Erfassungsmaßnahme erweist sich als besonders sinnvoll für den Fall, dass eine Netzstabilität eher schwach ist; in dem Fall würde eine festgestellte Oszillation über den Erfassungszeitraum bereits ein starkes Indiz für einen Aufschwingungszustand darstellen.

In einem weiteren zweiten Schritt S2 wird die Wirkleistung Q der Windenergieanlage WEA als zeitlicher Verlauf über einen zweiten Erfassungszeitraum erfasst; bevorzugt stimmen der erste und zweite Erfassungszeitraum überein und die Wirkleistung Q und die Netzspannung U werden simultan erfasst. Insbesondere hat sich gezeigt, dass die Erfassung eines Sollwerts der Blindleistung Q-SOLL in einem Schritt S2.1 an einer Windparksteuerungsschnittstelle 103 zur Windenergieanlage WEA, 100 vorteilhaft ist. Hintergrund einer solchen Maßnahme könnte sein, dass sich eine Feststellung einer Oszillation besonders dann als signifikant für einen Aufschwingungszustand erweist, wenn die Netzstabilität vergleichsweise stark ist. Dann weist die oszillierende Blindleistung auf eine Regleroszillation hin, deren Aufschwingungsverhalten beseitigt werden sollte.

Die Kombinationen der weiteren Schritte S1 und S2 nimmt sowohl schwache Netzstabilitätssituationen als auch starke Netzstabilitätssituationen auf. Anders formuliert, ist der erste Schritt S1 auf die Überwachung von Oszillationen am Netzverknüpfungspunkt 118 zum Versorgungsnetz 120 gerichtet, während der zweite Schritt S2 auf die Überwachung von Oszillationen an der Windenergieanlage WEA selbst gerichtet ist. Die Kombination der beiden Schritte S1, S2 überwacht Oszillationen wie sie bei einer angekoppelten Windenergieanlage 100 oder einem angekoppelten Windpark 112 an einem elektrischen Versorgungsnetz 120 entstehen können und die zu unerwünschten Aufschwingungszuständen beitragen können. Beide Parameter einer Netzspannung U und einer Blindleistung Q-Soll lassen sich vergleichsweise einfach messen in den Schritten S1.1 und S2.1 bzw. sind als Messparameter bereits im Rahmen einer normalen Regelung mittels einer Windparksteuerung 131 für einen Windpark 112 vorgesehen. Damit stehen sie auf vergleichsweise einfache Weise bereits zur Verfügung und können für das weitere Verfahren herangezogen werden.

In einem dritten weiteren Schritt S3 wird festgestellt, ob die Abgabeleistung und die Netzspannung U einen Schwingungsverlauf aufweisen, der als eine Oszillation mit einer Periode T und mit einer Amplitude A vorliegt und die über den Erfassungszeitraum als Aufschwingungszustand zu charakterisieren ist; d.h. die insbesondere nicht abnimmt.

Dazu wird in einem ersten Prüfschritt S3.1 festgestellt, ob der Oszillation über den Erfassungszeitraum eine Periode T und eine Amplitude A zugeordnet werden kann. Anders formuliert wird festgestellt, ob es sich überhaupt um eine relevante Oszillation handelt und nicht lediglich um eine statische Schwingung, die nicht als Oszillation einzustufen ist. Dazu kann ggf. geprüft werden, ob eine festgestellte Periode T einer Größenfrequenz mit ausreichend geringer Bandbreite zugeordnet werden kann bzw. es kann zusätzlich geprüft werden, ob die festgestellte Periode T im Erfassungszeitraum nicht mehr als eine vorgegebene Varianz schwankt. Vorzugsweise wird festgestellt, dass die Periode T einer immer gleichen Frequenz zugeordnet werden kann, d.h. über den Erfassungszeitraum konstant ist.

In einem zweiten Prüfschritt S3.2 wird sodann geprüft, ob die festgestellte Periode T, soweit relevant, --innerhalb eines Periodenzeitintervalls I=[...] liegt, das vorliegend jedenfalls nur Schwingungen mit Perioden T zwischen 100ms und 20s für relevant erachtet. Diese Grenzwerte des Periodenintervalls I können sich aus der Erfahrung betreffend die üblicherweise angesetzten Windparksteuerungs- und/oder Regel-Systems 130 und Windparksteuerungs-Eigenschaften für eine Windenergieanlage 100 bzw. für einen Windpark 112 ergeben. Außerdem werden dadurch mit anderen Schwingungszuständen auftretende wechselnde Versorgungsnetzzustände ausgeschlossen.

In einem dritten Prüfschritt S3.3 wird festgestellt, ob die gemessene Amplitude A oberhalb einer Schwellwertamplitude Aₛ (d.h. A>Aₛ) liegt. Ist dies der Fall, wird in einem vierten Prüfschritt S3.4 geprüft, ob die Amplitudenwerte der Amplitude A über den Erfassungszeitraum mit der Zeit zunehmen; d.h. es wird geprüft, ob die Steigung Grad A oberhalb einer Grenzsteigung Gₛ liegt. Das hier beschriebene Verfahren lässt somit Oszillationen unberücksichtigt, deren Amplitudenwert der Amplitude A ausreichend gering ist oder aber deren Amplitudenwert mit ausreichender Geschwindigkeit abnimmt.

In einer Variante kann in einem dritten Prüfschritt S3.3' auch geprüft werden, ob die gemessene Amplitude oberhalb einer oberen Schwellwertamplitude (A>>Aₛ⁺) liegt; ist dies der Fall kann --unabhängig davon, ob die Amplitude A steigt oder fällt im Schritt S3.4'-- darauf erkannt werden, dass ein Aufschwingungszustand vorliegt. Dieser Maßgabe liegt die Erfahrung zugrunde, dass bei ausreichend großen Amplituden A>>Aₛ⁺ das System an seine Grenzen gerät und dann unabhängig davon, ob es sich um eine Aufschwingung, Abschwingung oder gleichbleibende Schwingung handelt, kann der Regelparameter der Windparksteuerung 131 gedrosselt werden.

Sind im Schritt S4 für die oben genannten Prüfschritte S3.1, S3.2, S3.3, S3.4 bzw. S3.1, S3.2, S3.3', S3.4' alle Ergebnisse positiv, d.h. alle Prüfanfragen mit "JA" zu beantworten, so ist --dem "J-Zweig" des Verfahrens folgend-- ein Parametersatz der Windparksteuerung 131 in seinen Werten um geeignete Drosselwerte Δ in einem fünften Schritt S5 zu drosseln, d.h. üblicherweise sind dann entsprechende Stellparameter, Rampen oder dgl. Vorgabewerte der Regler zu verringern, zu drosseln oder zu dämpfen. Das Verfahren kann dann wiederum beim Schritt S0 aufgenommen werden und ggfs. in einer Schleife verlaufen.

Ist anderenfalls auch nur eine der Prüfschritte S3.1, S3.2, S3.3, S3.4 bzw. S3.1, S3.2, S3.3', S3.4' mit "NEIN" zu beantworten ist vorliegend vorgesehen, dass eine Parameteränderung für die Regler 500 der Windparksteuerung 131 ausbleibt. Der Grundgedanke zu dieser Weiterbildung liegt darin, dass ein Großteil solcher Schwingungen, die nicht allen vier der vorgenannten Prüfkriterien S3.1 bis S3.4/S3.4' entsprechen, entweder abnehmend sind (d.h. allein verschwinden) oder zu gering sind (und deswegen unbeachtlich sind). Auch hier kann anschließend das Prüfverfahren zur Erfassung eines Aufschwingungsverhaltens mit Schritt S0 als Schleife weiter durchlaufen werden.

Im Ergebnis wird bei der Betrachtung beider Parameter (nämlich der Netzspannung U und der Abgabeleistung, insbesondere Blindleistung (Q-Soll)) mit den genannten Prüfabfragen ein echtes Aufschwingungsverhalten als Oszillation erkannt und von statistischen, normalen oder parasitären Schwingungszuständen unterschieden. Insbesondere werden andere Schwingungsphänomene, die sich nicht aufschwingen, erkannt, bzw. ausgeschlossen von einer Regelkorrektur durch Parameteränderung Δ in Schritt S5.

## Patentansprüche

1. Verfahren zum Betrieb einer Windenergieanlage (100) und/oder eines Windparks (112), zum Einspeisen elektrischer Leistung in ein elektrisches Versorgungsnetz (120), wobei eine Abgabeleistung, insbesondere eine Wirk- und/oder Blindleistung (Q, P), mittels wenigstens einem Leistungsregelmodul (500) einer Regel- und/oder Steuereinrichtung (131) geregelt wird, aufweisend die Schritte:
- Vorgeben (S0) eines Leistungs-Regeleingangswertes und Bestimmen eines Leistungs-Regelausgangswertes aus dem Leistungs-Regeleingangswert sowie Ausgeben eines Leistungs-Regelausgangswertes, wobei
- ein zeitlicher Verlauf der Abgabeleistung der Windenergieerzeugung über einen Erfassungszeitraum erfasst wird (S2), und
- ein zeitlicher Verlauf der Netzspannung des elektrischen Versorgungsnetzes über einen Erfassungszeitraum erfasst wird (S1), wobei
- über den Erfassungszeitraum geprüft wird, ob die Abgabeleistung und die Netzspannung einen Schwingungsverlauf aufweist, **dadurch gekennzeichnet, dass**
- dem Schwingungsverlauf eine Oszillation mit einer Periode (T) und mit einer Amplitude (A) zugeordnet wird, und
- festgestellt wird, dass die Oszillation über den Erfassungszeitraum anhält und dabei nicht abnimmt, wobei festgestellt wird, dass die Periode (T) über den Erfassungszeitraum einen Periodenwert innerhalb eines Periodenbereichs hat, und/oder
- festgestellt wird, dass die Amplitude (A) über den Erfassungszeitraum einen Amplitudenwert oberhalb einer Schwellwertamplitude hat, und/oder
- festgestellt wird, dass die Amplitude über den Erfassungszeitraum einen Amplitudenwert hat, der zunimmt, und
- ein Signal zur Signalisierung eines Aufschwingungszustand ausgegeben wird.

2. Verfahren nach Anspruch 1, **dadurch gekennzeichnet, dass** ein unterer Periodengrenzwert des Periodenbereichs zwischen 0.05 s und 0.5 s liegt.

3. Verfahren nach einem der vorhergehenden Ansprüche, **dadurch gekennzeichnet, dass** ein oberer Periodengrenzwert des Periodenbereichs zwischen 10 s und 30 s liegt.

4. Verfahren nach einem der vorhergehenden Ansprüche, **dadurch gekennzeichnet, dass** festgestellt wird, dass
- die Periode über den Erfassungszeitraum, insbesondere über einen Grenzzeitwert, einen weitgehend anhaltenden Periodenwert hat.

5. Verfahren nach einem der vorhergehenden Ansprüche, **dadurch gekennzeichnet, dass** ein Periodenintervall einer Blindleistung und ein Periodenintervall einer Netzspannung unterschiedlich sind und/oder eine Schwellwertamplitude einer Blindleistung und eine Schwellwertamplitude einer Netzspannung unterschiedlich sind, insbesondere das Periodenintervall und/oder die Schwellwertamplitude der Blindleistung geringer ist als das Periodenintervall und/oder die Schwellwertamplitude der Netzspannung.

6. Verfahren nach einem der vorhergehenden Ansprüche, **dadurch gekennzeichnet, dass** parasitäre und/oder normale Blindleistungs-Schwingungszustände ausgeschlossen werden bevor das Signal den Aufschwingungszustand anzeigt.

7. Verfahren nach einem der vorhergehenden Ansprüche, **dadurch gekennzeichnet, dass** das nach dem Aufschwingungszustand anzeigenden Signal, insbesondere zur Beseitigung eines zu scharf eingestellten Regelparameters, ein Regelparameter einer Regel- und/oder Steuereinrichtung und/oder einer Versorgungsnetzeinrichtung geändert, insbesondere gedrosselt, wird.

8. Verfahren nach einem der vorhergehenden Ansprüche, **dadurch gekennzeichnet, dass** eine Blindleistung (Q) der Abgabeleistung, insbesondere ein Sollwert der Blindleistung und/oder ein Istwert der Blindleistung (Q) überwacht wird.

9. Verfahren nach einem der vorhergehenden Ansprüche, **dadurch gekennzeichnet, dass** über den Erfassungszeitraum hinaus die Abgabeleistung und die Netzspannung (U) überwacht wird, insbesondere gemessen wird, vorzugsweise über den Erfassungszeitraum hinaus ständig geprüft wird, ob die Abgabeleistung und die Netzspannung einen Schwingungsverlauf aufweist.

10. Regel- und/oder Steuereinrichtung zum Betrieb einer Windenergieanlage und/oder eines Windparks, die ausgebildet ist zur Ausführung eines Verfahrens nach einem der vorhergehenden Ansprüche, und die aufweist:
- ein Regelmodul (500) zum Vorgeben eines Leistungs-Regeleingangswertes und Bestimmen eines Leistungs-Regelausgangswertes aus dem Leistungs-Regeleingangswert sowie Ausgeben des Leistungs-Regelausgangswertes, wobei
- ein Anlagenmessmodul (902) zum Erfassen eines zeitlichen Verlaufs der Abgabeleistung der Windenergieerzeugung über einen Erfassungszeitraum, und
- eine Netzmesseinheit (920) zum Erfassen eines zeitlichen Verlaufs der Netzspannung des elektrischen Versorgungsnetzes über einen Erfassungszeitraum, und
- ein Auswertemodul (930), das ausgebildet ist zum Prüfen, ob über den Erfassungszeitraum die Abgabeleistung und die Netzspannung einen Schwingungsverlauf aufweisen, **dadurch gekennzeichnet, dass**
- das Auswertemodul weiter ausgebildet ist, dem Schwingungsverlauf eine Oszillation mit einer Periode (T) und mit einer Amplitude (A) zuzuordnen, wobei
- das Auswertemodul weiter eine Aufschwingungserfassung aufweist, mittels der feststellbar ist, dass die Oszillation über den Erfassungszeitraum anhält und dabei nicht abnimmt, wobei
- festgestellt wird, dass die Periode (T) über den Erfassungszeitraum einen Periodenwert innerhalb eines Periodenbereichs hat, und/oder
- festgestellt wird, dass die Amplitude (A) über den Erfassungszeitraum einen Amplitudenwert oberhalb einer Schwellwertamplitude hat, und/oder
- festgestellt wird, dass die Amplitude über den Erfassungszeitraum einen Amplitudenwert hat, der zunimmt, und
- einen Signalgeber zum Ausgeben eines einen Aufschwingungszustand anzeigenden Signals.

11. Regel- und/oder Steuereinrichtung nach Anspruch 10 **dadurch gekennzeichnet, dass** das Auswertemodul mit der Aufschwingungserfassung Teil einer Windenergieanlagen-Steuerung und/oder Windparksteuerung (130, 131, 132) und/oder das Anlagenmessmodul und das Netzmessmodul eine Einrichtung am Netzverknüpfungspunkt (118) sind.

12. Windenergieanlage (100) mit einer Regel- und/oder Steuereinrichtung nach Anspruch 10 oder 11.

13. Windpark (120) mit einer Anzahl von Windenergieanlagen und einer Regel- und/oder Steuereinrichtung nach Anspruch 10 oder 11.

## Claims

1. Method for operating a wind turbine (100) and/or a wind park (112) for feeding electrical power into an electrical power supply network (120), wherein a power output, in particular an active and/or reactive power (Q, P), is controlled by means of at least one power control module (500) of a regulation and/or control device (131), having the steps of:
- predetermining (S0) a power control input value and determining a power control output value from the power control input value and outputting a power control output value, wherein
- a time path of the power output of the wind energy production is detected over a detection time period (S2), and
- a time path of the network voltage of the electrical power supply network is detected over a detection time period (S1), wherein
- it is verified over the detection time period whether the power output and the network voltage have an oscillation path, **characterised in that**
- an oscillation having a period (T) and having an amplitude (A) is associated with the oscillation path, and
- it is determined that the oscillation is sustained over the detection time period and does not decrease in this instance, wherein it is determined that the period (T) over the detection time period has a period value within a period range, and/or
- it is determined that the amplitude (A) over the detection time period has an amplitude value above a threshold value amplitude, and/or
- it is determined that the amplitude over the detection time period has an amplitude value which increases and
- a signal for signalling an upward oscillation state is output.

2. Method according to claim 1, **characterised in that** a lower period limit value of the period range is between 0.05 s and 0.5 s.

3. Method according to either of the preceding claims, **characterised in that** an upper period limit value of the period range is between 10 s and 30 s.

4. Method according to any one of the preceding claims, **characterised in that** it is determined that
- the period over the detection time period, in particular over a limit time value, has a substantially sustained period value.

5. Method according to any one of the preceding claims, **characterised in that** a period range of a reactive power and a period range of a network voltage are different and/or a threshold value amplitude of a reactive power and a threshold value amplitude of a network voltage are different, in particular the period range and/or the threshold value amplitude of the reactive power is smaller than the period range and/or the threshold value amplitude of the network voltage.

6. Method according to any one of the preceding claims, **characterised in that** parasitic and/or normal reactive power oscillation states are excluded before the signal indicates the upward oscillation state.

7. Method according to any one of the preceding claims, **characterised in that**, after the signal which indicates the upward oscillation state, in particular in order to overcome an excessively sharply adjusted control parameter, a control parameter of a regulation and/or control device and/or a supply network device is changed, in particular throttled.

8. Method according to any one of the preceding claims, **characterised in that** a reactive power (Q) of the power output, in particular a desired value of the reactive power and/or an actual value of the reactive power (Q), is monitored.

9. Method according to any one of the preceding claims, **characterised in that** beyond the detection time period the power output and the network voltage (U) are monitored, in particular measured, preferably continuously verified beyond the detection time period, as to whether the power output and the network voltage have an oscillation path.

10. Regulation and/or control device for operating a wind turbine and/or a wind park, which is constructed to carry out a method according to any one of the preceding claims and which has:
- a control module (500) for predetermining a power control input value and determining a power control output value from the power control input value and outputting the power control output value, wherein
- an installation measurement module (902) for detecting a time path of the power output of the wind energy production over a detection time period, and
- a network measurement unit (920) for detecting a time path of the network voltage of the electrical power supply network over a detection time period, and
- an evaluation module (930) which is constructed to verify whether over the detection time period the power output and the network voltage have an oscillation path, **characterised in that**
- the evaluation module is further configured to associate an oscillation having a period (T) and an amplitude (A) with the oscillation path, wherein
- the evaluation module further has an upward oscillation detection, by means of which it can be determined that the oscillation is sustained over the detection time period and does not decrease in this instance, wherein
- it is determined that the period (T) over the detection time period has a period value within a period range, and/or,
- it is determined that the amplitude (A) over the detection time period has an amplitude value above a threshold value amplitude, and/or
- it is determined that the amplitude over the detection time period has an amplitude value which increases, and
- a signal transmitter for outputting a signal which indicates an upward oscillation state.

11. Regulation and/or control device according to claim 10, **characterised in that** the evaluation module with the upward oscillation detection are part of a wind turbine control system and/or wind park control system (130, 131, 132) and/or the installation measurement module and the network measurement module are a device on the network connection location (118).

12. Wind turbine (100) having a regulation and/or control device according to claim 10 or 11.

13. Wind park (120) having a number of wind turbines and a regulation and/or control device according to claim 10 or 11.

## Revendications

1. Procédé servant à faire fonctionner une éolienne (100) et/ou un parc éolien (112), servant à injecter une puissance électrique dans un réseau d'alimentation (120) électrique, dans lequel une puissance délivrée, en particulier une puissance active et/ou réactive (Q, P), est régulée au moyen d'au moins un module de régulation de puissance (500) d'un dispositif de régulation et/ou de commande (131), présentant les étapes suivantes :
- spécification (S0) d'une valeur d'entrée de régulation de puissance et de définition d'une valeur de sortie de régulation de puissance à partir de valeur d'entrée de régulation de puissance ainsi que d'envoi d'une valeur de sortie de régulation de puissance, dans lequel
- une évolution dans le temps de la puissance délivrée de la production d'énergie du vent est détectée sur un intervalle de temps de détection (S2), et
- une évolution dans le temps de la tension de réseau du réseau d'alimentation électrique est détectée sur un intervalle de temps de détection (S1), dans lequel
- il est contrôlé sur l'intervalle de temps de détection si la puissance délivrée et la tension de réseau présentent une évolution oscillatoire, **caractérisé en ce que**
- une oscillation avec une période (T) et avec une amplitude (A) est associée à l'évolution oscillatoire, et
- il est constaté que l'oscillation s'arrête sans diminuer ce faisant sur l'intervalle de temps de détection, dans lequel il est constaté que la période (T) a sur l'intervalle de temps de détection une valeur de période à l'intérieur d'une plage de périodes, et/ou
- il est constaté que l'amplitude (A) a, sur l'intervalle de temps de détection, une valeur d'amplitude supérieure à une amplitude de valeur de seuil, et/ou
- il est constaté que l'amplitude a, sur l'intervalle de temps de détection, une valeur d'amplitude qui augmente, et
- un signal est envoyé pour signaler un état d'oscillation ascendante.

2. Procédé selon la revendication 1, **caractérisé en ce qu'**une valeur limite de période inférieure de la plage de périodes est comprise entre 0,05 s et 0,5 s.

3. Procédé selon l'une quelconque des revendications précédentes, **caractérisé en ce qu'**une valeur limite de période supérieure de la plage de périodes est comprise entre 10 s et 30 s.

4. Procédé selon l'une quelconque des revendications précédentes, **caractérisé en ce qu'**il est constaté que
- la période a, sur l'intervalle de temps de détection, en particulier au-delà de la valeur de temps limite, une valeur de période largement persistante.

5. Procédé selon l'une quelconque des revendications précédentes, **caractérisé en ce qu'**un intervalle de période d'une puissance réactive et un intervalle de période d'une tension de réseau sont différents et/ou une amplitude de valeur de seuil d'une puissance réactive et une amplitude de valeur de seuil d'une tension de réseau sont différentes, en particulier l'intervalle de période et/ou l'amplitude de valeur de seuil de la puissance réactive sont inférieurs à l'intervalle de période et/ou à l'amplitude de valeur de seuil de la tension de réseau.

6. Procédé selon l'une quelconque des revendications précédentes, **caractérisé en ce que** des états d'oscillation de puissance réactive parasitaires et/ou normaux sont exclus avant que le signal n'affiche l'état d'oscillation ascendante.

7. Procédé selon l'une quelconque des revendications précédentes, **caractérisé en ce que** le signal s'affichant après l'état d'oscillation ascendante, en particulier servant à éliminer un paramètre de régulation réglé de manière trop forte, un paramètre de régulation d'un dispositif de régulation et/ou de commande et/ou d'un dispositif de réseau d'alimentation, sont modifiés, en particulier sont réduits.

8. Procédé selon l'une quelconque des revendications précédentes, **caractérisé en ce qu'**une puissance réactive (Q) de la puissance délivrée, en particulier une valeur théorique de la puissance réactive et/ou une valeur réelle de la puissance réactive (Q), est surveillée.

9. Procédé selon l'une quelconque des revendications précédentes, **caractérisé en ce que** la puissance délivrée et la tension de réseau (U) sont surveillées, en particulier sont mesurées, au-delà de l'intervalle de temps de détection, de préférence il est contrôlé en permanence au-delà de la période détection si la puissance délivrée et la tension de réseau présentent une évolution oscillatoire.

10. Dispositif de régulation et/ou de commande servant à faire fonctionner une éolienne et/ou un parc éolien, qui est réalisé pour exécuter un procédé selon l'une quelconque des revendications précédentes, et qui présente :
- un module de régulation (500) servant à spécifier une valeur d'entrée de régulation de puissance et servant à définir une valeur de sortie de régulation de puissance à partir de la valeur d'entrée de régulation de puissance ainsi qu'à envoyer la valeur de sortie de régulation de puissance,
- un module de mesure d'installation (902) servant à détecter une évolution dans le temps de la puissance délivrée de la génération d'énergie du vent sur un intervalle de temps de détection, et
- une unité de mesure de réseau (920) servant à détecter une évolution dans le temps de la tension de réseau du réseau d'alimentation électrique sur un intervalle de temps de détection, et
- un module d'évaluation (930), qui est réalisé pour contrôler si la puissance délivrée et la tension de réseau présentent, sur l'intervalle de temps de détection, une évolution oscillatoire, **caractérisé en ce que**
- le module d'évaluation est réalisé en outre pour associer, à l'évolution oscillatoire, une oscillation avec une période (T) et avec une amplitude (A), dans lequel
- le module d'évaluation présente par ailleurs une détection d'oscillation ascendante, au moyen de laquelle il peut être constaté que l'oscillation se maintient pendant l'intervalle de temps de détection sans diminuer ce faisant, dans lequel
- il est constaté que la période (T) a, sur l'intervalle de temps de détection, une valeur de période à l'intérieur d'une plage de périodes, et/ou
- il est constaté que l'amplitude (A) a, sur l'intervalle de temps de détection, une valeur d'amplitude supérieure à une amplitude de valeur de seuil, et/ou
- il est constaté que l'amplitude a, sur l'intervalle de temps de détection, une valeur d'amplitude qui augmente, et
- un émetteur de signaux servant à envoyer un signal indiquant un état d'oscillation ascendante.

11. Dispositif de régulation et/ou de commande selon la revendication 10, **caractérisé en ce que** le module d'évaluation avec la détection d'oscillation ascendante fait partie d'une commande d'éolienne et/ou d'une commande de parc éolien (130, 131, 132) et/ou le module de mesure d'installation et le module de mesure de réseau sont un dispositif au niveau du point de connexion de réseau (118).

12. Eolienne (100) avec un dispositif de régulation et/ou de commande selon la revendication 10 ou 11.

13. Parc éolien (120) avec un nombre d'éoliennes et un dispositif de régulation et/ou de commande selon la revendication 10 ou 11.
